# EUROPEAN PATENT APPLICATION

(11) **EP 2 469 880 A1**
(43) Date of publication of application: **27.06.2012**
(21) Application number: 11193421.2
(22) Date of filing: 14.12.2011
(51) Int. Cl.: H04N 21/438, H04N 21/426

(54) **Information processing apparatus and display changeover method**

(30) Priority: 27.12.2010 JP 2010289484
(71) Applicant: Sony Corporation, Tokyo 108-0075 (JP)
(72) Inventor: Kurosaki,, Daisuke, Minato-ku, Tokyo 108-0075 (JP); Nakagawa,, Noriaki, Minato-ku, Tokyo 108-0075 (JP); Suzuki,, Katsuhiko, Minato-ku, Tokyo 108-0075 (JP)
(74) Representative: Lewis, Darren John

(57) **Abstract**

An information processing apparatus includes: a first image information production section adapted to produce first image information for causing an image to be displayed on a display apparatus; a second image information production section having start-up time shorter than that of the first image information production section and adapted to produce second image information for causing an image to be displayed on the display apparatus; and a control section adapted to set, when an operation input relating to a function which involves start-up of the first image information production section is accepted, an output source to the display apparatus to the second image information production section until outputting of the first image information is enabled but change over, after the outputting of the first image information is enabled, the output source to the first image information production section.

## Description

The present technology relates to an information processing apparatus and a display changeover method.

An information processing apparatus which includes a built-in television tuner and has a function for viewing a television program and/or a function for recording a television program has been utilized. Particularly in recent years, some information processing system including an information processing apparatus and a display apparatus connected to each other is configured such that a television tuner is built also in the display apparatus such that a television program can be viewed solely on the display apparatus.

As one of such information processing apparatus, for example, an information processing apparatus which is improved in operability to a user is known and disclosed, for example, in Japanese Patent Laid-Open No. 2007-209015. In the information processing apparatus mentioned, when setting of a television channel is carried out for the television tuner on the information processing apparatus side, setting of the television channel is carried out also for the television tuner on the display apparatus side.

Incidentally, in an information processing apparatus, a television viewing environment is implemented generally by an operating system or an application for viewing a television program. However, the software of the operating system or the application sometimes requires much time for start-up thereof. Therefore, waiting time is sometimes caused to appear before starting of television viewing.

Therefore, it is desirable to provide an information processing apparatus and a display changeover method by which the waiting time before starting of viewing of an image is reduced.

Various respective aspects and features of the invention are defined in the appended claims. Combinations of features from the dependent claims may be combined with features of the independent claims as appropriate and not merely as explicitly set out in the claims.

According to an embodiment of the technology disclosed herein, there is provided an information processing apparatus including a first image information production section adapted to produce first image information for causing an image to be displayed on a display apparatus, a second image information production section having start-up time shorter than that of the first image information production section and adapted to produce second image information for causing an image to be displayed on the display apparatus, and a control section adapted to set, when an operation input relating to a function which involves start-up of the first image information production section is accepted, an output source to the display apparatus to the second image information production section until outputting of the first image information is enabled but change over, after the outputting of the first image information is enabled, the output source to the first image information production section.

According to another embodiment of the disclosed technology, there is provided a display changeover method for an information processing apparatus, including setting, when an operation input relating to a function which involves start-up of a first image information production section for producing first image information for causing an image to be displayed on a display apparatus is accepted, an output source to the display apparatus to a second image information production section having start-up time shorter than that of the first image information production section for producing second image information for causing an image to be displayed on the display apparatus until outputting of the first image information is enabled, and changing over the output source to the first image information production section after outputting of the first image information is enabled.

With the information processing apparatus and the display changeover method, the waiting time before starting of viewing of an image can be reduced.

The above and other features and advantages of the disclosed technology will become apparent from the following description and the appended claims, taken in conjunction with the accompanying drawings in which like parts or elements denoted by like reference characters, and in which:
FIG. 1 is a block diagram showing an information processing apparatus according to a first embodiment;
FIG. 2 is a block diagram showing an example of a hardware configuration of an information processing apparatus according to a second embodiment;
FIG. 3 is a schematic view showing an example of buttons of a remote controller shown in FIG. 2;
FIG. 4 is a block diagram showing a functional configuration of the information processing apparatus of FIG. 2;
FIG. 5 is a view illustrating an example of a data structure of a command output destination selection table used in the information processing apparatus of FIG. 2;
FIG. 6 is a view illustrating an example of a data structure of a start--up main cause management table used in the information processing apparatus of FIG. 2;
FIG. 7 is a view illustrating an example of a data structure of a viewing information management table used in the information processing apparatus of FIG. 2;
FIG. 8 is a flow chart illustrating a cooperation starting process executed in the information processing apparatus of FIG. 2;
FIGS. 9A to 9D and 10 are schematic views showing an example of several messages used in the information processing apparatus of FIG. 2;
FIG. 11 is a flow chart illustrating first display changeover control executed by the information processing apparatus of FIG. 2;
FIG. 12 is a sequence diagram illustrating first cooperation control executed by the information processing apparatus of FIG. 2;
FIG. 13 is a flow chart illustrating second display changeover control executed by the information processing apparatus of FIG. 2;
FIG. 14 is a sequence diagram illustrating second cooperation control executed by the information processing apparatus of FIG. 2;
FIG. 15 is a schematic view illustrating display changeover control executed by the information processing apparatus of FIG. 2; and
FIG. 16 is a sequence diagram illustrating another example of the second cooperation control.

In the following, preferred embodiments of the technology disclosed herein are described.

### First Embodiment

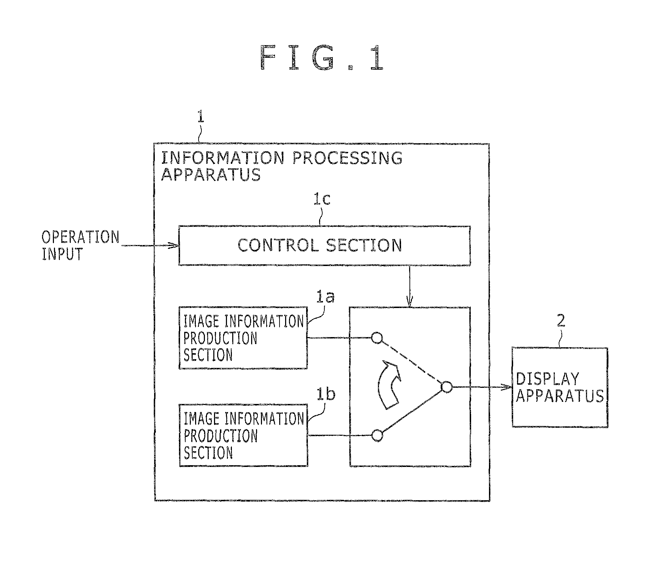

FIG. 1 shows an information processing apparatus according to a first embodiment of the disclosed technology. Referring to FIG. 1, the information processing apparatus 1 shown is connected to a display apparatus 2. The information processing apparatus 1 includes a pair of image information production sections 1a and 1b, and a control section 1c.

The image information production section 1a produces first image information for displaying an image on the display apparatus 2. The image information production section 1a is implemented, for example, by the information processing apparatus 1 executing both or one of a first operating system and a first application which operates on the first operating system.

The image information production section 1b produces second image information for displaying an image on the display apparatus 2. The starting time of the image information production section 1b is shorter than that of the image information production section 1a. The image information production section 1b is implemented, for example, by the information processing apparatus 1 executing both or one of a second operating system and a second application which operates on the second operating system. The image information production section 1b executes a simpler operating system or application whose functions are limited from those of the image information production section 1a to make the starting time shorter than that of the image information production section 1a.

The control section 1c accepts an operation input relating to a function which involves start-up of the image information production section 1a. The operation input may be (1) an operation input for the instruction to start image viewing on the image information production section 1a, (2) an operation input for the instruction to start utilization of a function which is restricted in and cannot be utilized on the image information production section 1b but can be utilized on the image information production section 1a, or the like. As an example of the operation input of (2), starting of recording by the image information production section 1a may be applicable. In response to the operation input, the information processing apparatus 1 starts start-up of the image information production section 1a. The start-up of the image information production section 1a may be started by the control section 1c.

The control section 1c determines the image information production section 1b as the output source to the display apparatus 2 until outputting of first image information by the image information production section 1a is enabled. At this time, if the image information production section 1b is inoperative, then the control section 1c may start up the image information production section 1b.

If outputting of first image information by the image information production section 1a is enabled, then the control section 1c changes over the output source to the display apparatus 2 to the information processing apparatus 1. At this time, the control section 1c may take over the substance of the accepted operation input or the setting substance used for production of the second image information by the image information production section 1b. Such setting substance may be information representative of a viewing state such as, for example, the picture quality, voice, sound volume, subtitle and so forth. Further, if the first and second image information is information of a television image, then the setting substance may be information representative of a viewing state of a channel, a program table and so forth. Further, a function corresponding to an operation input after the changeover may be executed by the image information production section 1a.

In the information processing apparatus 1, an operation input relating to a function involved in start-up of the image information production section 1a is accepted. Consequently, the image information production section 1b whose starting time is shorter than that of the image information production section 1a is used as the output source to the display apparatus 2 by the control section 1c until after outputting of the first image information is enabled. Then, after outputting of the first image information is enabled, the output source to the display apparatus 2 is changed over to the image information production section 1a by the control section 1c.

Consequently, the waiting time ti11 starting of viewing of an image can be reduced. In particular, since it is made possible to fill in the time by means of the image information production section 1b which can be started up more quickly than the information processing apparatus 1 until image viewing is enabled by the image information production section 1a, the user can quickly start viewing of an image. As a result, the cumbersomeness in waiting till the start of viewing can be reduced.

Particularly in the case where an image of the image information production section 1b is viewed already, image display by the image information production section 1b is maintained on the display apparatus 2 until outputting of the first image information by the image information production section 1a is enabled. Then, the output source to the display apparatus 2 can be changed over to the image information production section 1a at the timing at which outputting of the first image information is enabled. Consequently, for a period of time until the image information production section 1a is started up, the user can carry out image viewing by means of the image information production section 1b. Therefore, interruption of viewing of the user can be prevented.

Thereupon, if the setting substance used for production of the second image information by the image information production section 1b is taken over by the image information production section 1a, then the labor and time for the re-setting operation of the user can be eliminated. Further, if a function corresponding to the operation input taken as an opportunity after the changeover is executed by the image information production section 1a, then the labor and time for a re-operation of the user can be eliminated. By eliminating such labor and time as described above, the convenience to the user can be enhanced.

In the second embodiment described below, an information processing apparatus which includes two television viewing environments as the image information production sections 1a and 1b is described.

### Second Embodiment

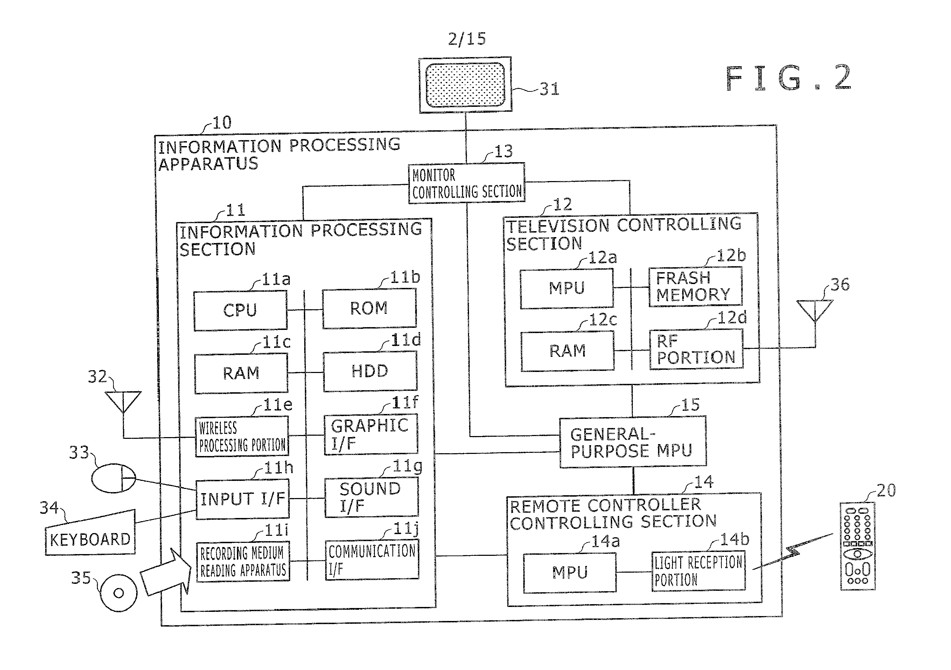

FIG. 2 shows an example of hardware of an information processing apparatus according to a second embodiment. Referring to FIG. 2, the information processing apparatus 10 includes two television viewing environments. The user can selectively use the television viewing environments in response to an application. The user can carry out operations for changeover of the television viewing environment of the information processing apparatus 10, selection of a channel, change of the picture quality, voice and sound volume and so forth.

The information processing apparatus 10 is connected to a monitor 31. The information processing apparatus 10 produces television image information to the monitor 31 so that a television image is displayed on the monitor 31. The television image information here includes image information and sound information regarding a television program. In the information processing apparatus 10, various functions including the television viewing environments can be implemented. The information processing apparatus 10 is, for example, a personal computer (PC).

The information processing apparatus 10 includes an information processing section 11, a television controlling section 12, a monitor controlling section 13, a remote controller controlling section 14 and a general-purpose MPU (Micro Processing Unit) 15.

The information processing section 11 implements various information processing functions. The information processing section 11 takes charge of principal functions, for example, as a PC. The information processing section 11 includes a CPU (Central Processing Unit) 11a, a ROM (Read Only Memory) 11b, and a RAM (Random Access Memory) 11c. The information processing section 11 further includes a HDD (Hard Disk Drive) 11d, a wireless processing portion 11e, a graphic I/F (InterFace) 11f, a sound I/F 11g, an input I/F 11h, a recording medium reading apparatus 11i and a communication I/F 11j.

The CPU 11a executes an operating system (hereinafter referred to as OS) program or an application program to control the entire information processing section 11.

The ROM 11b stores predetermined programs such as a BIOS (Basic Input/Output System) program which is executed upon start-up of the information processing section 11. The ROM 11b may be a rewritable nonvolatile memory.

The RAM 11c temporarily stores at least part of the OS program or an application program executed by the CPU 11a.

The HDD 11d stores the OS program and application programs. Further, the HDD 11d stores data used for processing of the CPU 11a. It is to be noted that some other nonvolatile storage apparatus such as a SSD (Solid State Drive) may be used in place of or in addition to the HDD 11d.

The wireless processing portion 11e is connected to an antenna 32 and acquires television broadcasting waves of the RF (Radio Frequency) band received by the antenna 32. Then, the wireless processing portion 11e carries out tuning of the television broadcasting waves for a frequency of a desired channel and frequency conversion into a frequency of a baseband to acquire a baseband signal of the channel. The wireless processing portion 11e demodulates the acquired baseband signal and uses the demodulated baseband signal to carry out an error correction decoding process and a descrambling process to carry out a reproduction process of a content such as a television program. The wireless processing portion 11e is, for example, a tuner. The television program reproduced by the wireless processing portion 11e can be viewed, recorded, video reproduced or the like using an application program executed by the CPU 11a.

The graphic I/F 11f outputs image information of the OS or an application including image information of a content reproduced by the wireless processing portion 11e in accordance with an instruction from the CPU 11a to the monitor controlling section 13.

The sound I/F 11g outputs sound information of the OS or an application including sound information of a content reproduced by the wireless processing portion 11e in accordance with an instruction from the CPU 11a to the monitor controlling section 13.

The input I/F 11h is connected to input devices such as a mouse 33 and a keyboard 34. The input I/F 11h outputs an input signal sent thereto from the input device to the CPU 11a.

The recording medium reading apparatus 11i is a reading apparatus for reading data stored in a recording medium 35. In the recording medium 35, for example, programs to be executed by the information processing section 11 or the general-purpose MPU 15 are stored. The information processing section 11 and the general-purpose MPU 15 can implement such display changeover control as hereinafter described, for example, also by reading a program recorded on the recording medium 35 into a predetermined memory and executing the program. In particular, the program can be recorded on and distributed together with the recording medium 35 which can be read by a computer.

As the recording medium 35, for example, a magnetic recording apparatus, an optical disk, a magneto-optical recording medium or a semiconductor memory can be used. The magnetic recording apparatus may be a HDD, a flexible disk (FD), a magnetic tape or the like. The optical disk may be a CD (Compact Disc), a CD-R (Recordable)/RW (ReWritable), a DVD (Digital Versatile Disc), a DVD-R/RW/RAM, a Blu-ray (registered trademark of the Blu-Ray Disk Association) disk or the like. The magneto-optical recording medium may be an MO (Magneto-Optical Disk) or the like. The semiconductor memory may be a flash memory such as a USB (Universal Serial Bus) memory or the like.

The communication I/F 11j is connected to a network. The communication I/F 11j can carry out data communication with a difference information processing apparatus through the network. It is to be noted that a program recorded on the recording medium 35 may be stored into the different information processing apparatus connected to the network. In this instance, also it is possible for the information processing apparatus 10 to download a program from the different information processing apparatus and execute the program.

The television controlling section 12 is a television tuner. The television controlling section 12 starts up in shorter time than the television function of the information processing section 11. The television controlling section 12 includes a simpler and easier television function than that of the information processing section 11 in order to implement the start-up in shorter time. For example, the television controlling section 12 does not include such functions as recording and video reproduction functions although it includes a viewing function. The television controlling section 12 includes an MPU 12a, a flash memory 12b, a RAM 12c and a RF portion 12d.

The MPU 12a executes an OS program or an application program to control the entire television controlling section 12. Further, the MPU 12a implements a function of the television controlling section 12 as a television tuner by executing the application program. It is to be noted that the OS program may include the application program.

The flash memory 12b stores a BIOS program executed upon start-up of the television controlling section 12, an OS program and an application program. Further, the flash memory 12b stores data to be used for processing of the MPU 12a.

The RAM 12c temporarily stores the OS program and at least part of an application program to be executed by the MPU 12a.

The RF portion 12d is connected to an antenna 36 and acquires television broadcasting waves of the RF band received by the antenna 36. The RF portion 12d carries out tuning of the television broadcasting waves with a frequency of a desired channel and frequency conversion into a frequency of a baseband to acquire a baseband signal of the channel. The RF portion 12d demodulates the acquired baseband signal, carries out an error correction decoding process using a result of the demodulation and the outputs a resulting signal to the MPU 12a. The MPU 12a executes a descrambling process for the data obtained by the error correction decoding process and carries out a content reproduction process of a television program or the like.

The MPU 12a outputs an image and sound of a content to the monitor controlling section 13.

The monitor controlling section 13 controls an output source of television image information to the monitor 31. The monitor controlling section 13 changes over the output source between the information processing section 11 and the television controlling section 12, for example, in accordance with an instruction of the general-purpose MPU 15. Further, the monitor controlling section 13 includes an OSD (On Screen Display) function for displaying a graphic or a character string in a superposed relationship on an image displayed on the monitor 31 in accordance with an instruction of the general-purpose MPU 15.

The remote controller controlling section 14 accepts an operation by a remote controller 20. The remote controller controlling section 14 includes an MPU 14a and a light reception portion 14b.

The MPU 14a outputs a command received from the remote controller 20 to the information processing section 11 and the general-purpose MPU 15.

The light reception portion 14b receives an infrared signal transmitted from the remote controller 20 and analyzes the infrared signal to acquire a command. The light reception portion 14b outputs the command to the MPU 14a.

The general-purpose MPU 15 controls operation of the information processing section 11 and television controlling section 12, and monitor controlling section 13 and remote controller controlling section 14. In particular, the general-purpose MPU 15 controls start-up and stopping of the information processing section 11 and the television controlling section 12 based on a command acquired from the remote controller controlling section 14, changeover of the television image by the monitor controlling section 13 and so forth. Further, the general-purpose MPU 15 controls the output destination of a command of the remote controller controlling section 14 depending upon television image information of which one of the information processing section 11 and the television controlling section 12 is displayed on the monitor 31.

Also it is possible to use the general-purpose MPU 15 for power supply management of the information processing section 11 and the television controlling section 12, battery control, fan control and so forth. The information processing apparatus 10 supplies power to the general-purpose MPU 15 even if the power supply to the information processing section 11 and the television controlling section 12 is stopped. Such various controlling functions can be implemented thereby.

The general-purpose MPU 15 includes a memory which stores a program for implementing the functions described above of the general-purpose MPU 15 and stores data to be used for processing of the general-purpose MPU 15.

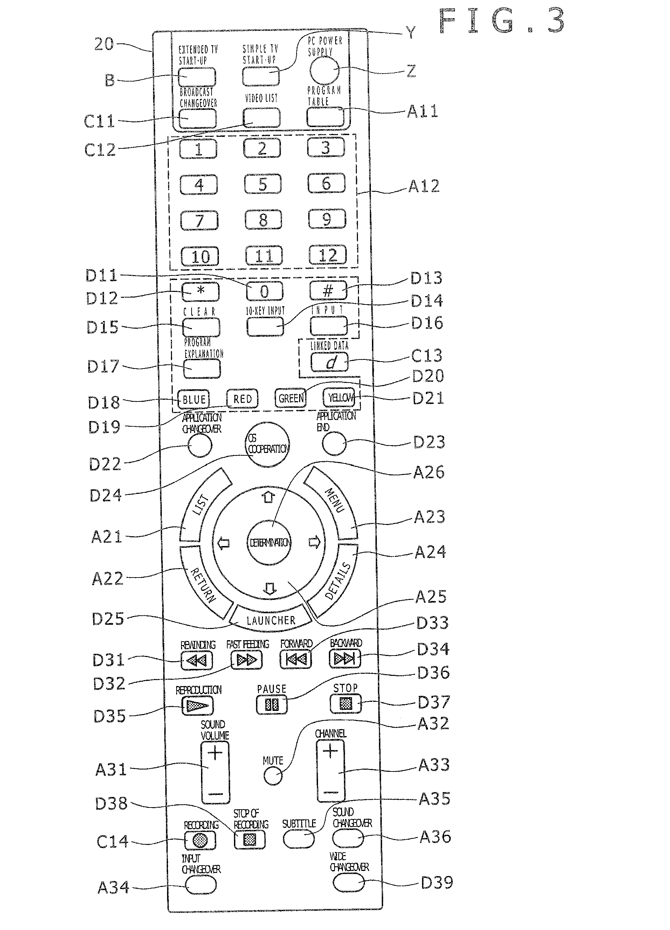

FIG. 3 shows an example of buttons of the remote controller 20. Referring to FIG. 3, the remote controller 20 includes button groups A, C and D and buttons B, Y and Z. The button groups A, C and D are sets of buttons whose reference character is represented by a combination of a letter such as A and a numerical value such as 11. For example, the reference character of a button included in the button group A is represented by a combination of a letter A and a numerical value like A11.

The button group A includes buttons which can be utilized for operation of the information processing section 11 and the television controlling section 12. If an operation for the button group A is carried out, then the information processing apparatus 10 causes that one of the devices, which causes the monitor 31 to display, to execute a process based on the operation. In particular, if a screen image of the information processing section 11 is displayed on the monitor 31, then the information processing apparatus 10 causes the information processing section 11, but if a screen image of the television controlling section 12 is displayed on the monitor 31, then the information processing apparatus 10 causes the television controlling section 12, to execute a process based on the operation.

The button group A includes buttons A11, A21 to A26 and A31 to A36 and a channel operation button group A12.

The button A11 is used for the instruction to display a program table. The channel operation button group A12 includes buttons for use for channel selection. The channel operation button group A12 can be used also for carrying out character inputting during operation of the television function of the information processing section 11.

The button A21 is used for the instruction to display a setting table of the picture quality, sound quality, sound volume and so forth. The button A22 is used for the return to a preceding screen image or for the placement of a menu during display into a non-display state. The button A23 is used for the changeover of a table of all utilizable menus between display/non-display states. The button A24 is used for the instruction to start up a predetermined optional function. The button A25 is used for the instruction of movement of a selection range of a cursor on a screen image. The button A26 is used for the instruction of execution of an item selected by the cursor.

The button A31 is used for the adjustment of the sound volume. The button A32 is used for the reduction of the sound volume to a minimum level or the mute. The button A33 is used for the instruction of changeover of a channel. The button A34 is used for the instruction to change over the screen display from display of the main body of the information processing apparatus 10, that is, of one of the information processing section 11 and the television controlling section 12, to display by an external input. An external input terminal is provided on the information processing apparatus 10. The external input may be HDMI (High-Definition Multimedia Interface) (registered trademark of HDMI Licensing) or a video input. The button A35 is used for the instruction of a display/non-display state of a subtitle. The button A36 is used for the instruction to change over the sound when a program or a video which includes a plurality of sounds is viewed.

The button B is used for the instruction to start up the television function of the information processing section 11. When the television function of the information processing section 11 is not started up as yet, the information processing apparatus 10 causes the television controlling section 12 and the information processing section 11 to cooperate with each other to carry out start-up of the television function of the information processing section 11. Details of processing relating to the cooperation are hereinafter described. To the button B, for example, a character string "extended TV (Television) start-up" is applied so that it can be identified readily by the user that the button B is provided for the start-up of the television function of the information processing section 11. If the user wants to start up television viewing executed by the television function of the information processing section 11, the television function can be executed by the information processing section if the button B is pressed.

The button group C includes buttons which cannot be executed by the television function of the television controlling section 12 but can be utilized for operation of functions which can be executed by the television function of the information processing section 11. The information processing apparatus 10 accepts an operation for the button group C even if the television function of the information processing section 11 is not started up as yet. If the television function of the information processing section 11 is not started up as yet, then the information processing apparatus 10 causes the television controlling section 12 and the information processing section 11 to cooperate with each other to carry out start-up of the television function of the information processing section 11. The button group C includes buttons C11 to C14.

The button C11 is used for the instruction to change over between terrestrial digital broadcasting and satellite digital broadcasting. The button C12 is used for the instruction of recording reservation or display of a recorded video list. The button C13 is used for the instruction to display a content list included in a data broadcast. The button C14 is used for the instruction to start recording of a television program.

The button group D includes buttons which can be utilized for operation of functions which cannot be executed by the television function of the television controlling section 12 but can be executed by the television function of the information processing section 11. When the television function of the information processing section 11 is not started up as yet, the information processing apparatus 10 does not accept an operation for the button group D. The button group D is different in this regard from the button group C. The button group D includes buttons D11 to D25 and D31 to D39.

The buttons D11 to D13 are used for the character inputting. The button D14 is used for the channel changeover in direct channel selection by inputting of three figures. The button D15 is used for the erasure of a character upon character inputting. The button D16 is used for the determination of an inputted character when a keyword search or the like is carried out. The button D17 is used for the instruction of display of detailed information of a program. The buttons D18 to D21 are used for the operation of a data broadcast, a bidirectional service and a program table. The button D22 is used for the changeover of the window on this side to another window in an OS of a window system. The button D23 is used for the closing of the window on this side. The button D24 is used for the instruction to start up a predetermined function of the OS. The button D25 is used for the instruction to start up a different application relating to an application which implements the television function.

The buttons D31 to D37 are used for the video operation. In particular, the button D31 is used for the instruction for rewinding. The button D32 is used for the instruction for fast feeding. The button D33 is used for the instruction for the movement to a preceding chapter upon video reproduction. The button D34 is used for the instruction for the movement of a next chapter upon video reproduction. The button D35 is used for the instruction for starting of reproduction. The button D36 is for the instruction for the pause of reproduction. The button D37 is used for the instruction for the stopping of reproduction.

The button D38 is used for the instruction to stop recording. The button D39 is used for the changeover of a mode for screen display, that is, for a screen mode, among a normal mode which does not involve working, a full mode in which the screen display is adjusted to the display region of the monitor 31 and a zoom mode in which the screen display is expanded.

The button Y is used for the instruction to start up the television controlling section 12. The television controlling section 12 includes a television function simpler and easier than that of the information processing section 11 to reduce the starting time as described hereinabove. Therefore, for example, a character string "simple TV start-up" is applied to the button Y so that the foregoing can be identified readily by the user.

The button Z is used to turn on the power supply to the information processing section 11. When the power supply to the information processing section 11 is on, the power supply to the information processing section 11 may be turned off or the information processing section 11 may be placed into a standby state in response to an operation of the button Z.

It is to be noted that the arrangement of the buttons of the remote controller 20 and the manner of allocation of the functions described above are an example. In other words, the arrangement of the buttons may be changed suitably or those functions which can be utilized on the information processing section 11 and the television controlling section 12 may be increased or decreased from those in the example described above. For example, the television controlling section 12 may be modified such that it allows operation of a program table by the buttons D18 to D21.

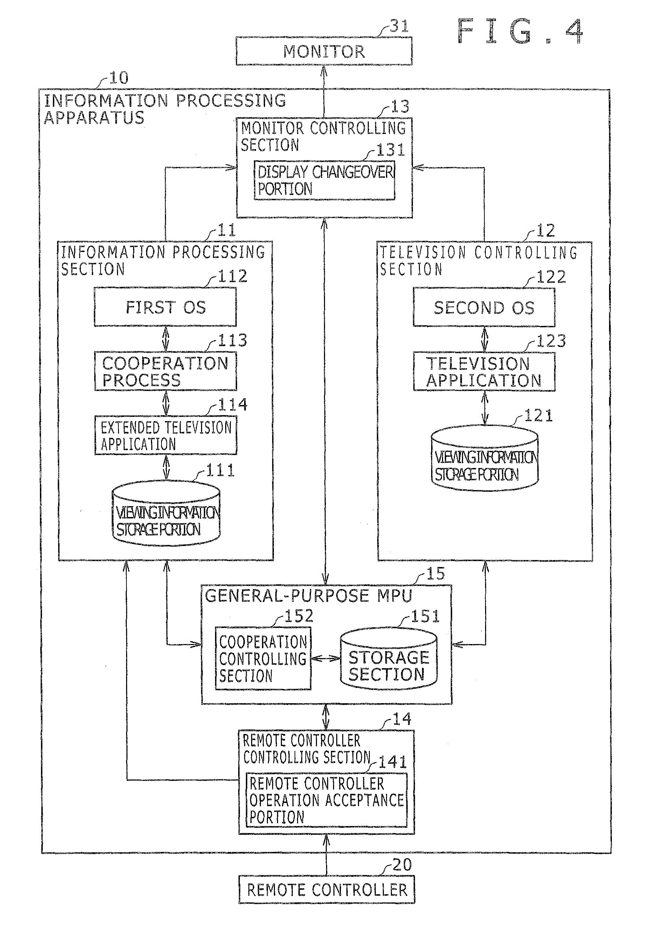

FIG. 4 illustrates functions of the information processing apparatus. Referring to FIG. 4, the information processing section 11 includes a viewing information storage portion 111, a first OS 112, a cooperation process 113 and an extended television application 114. The functions of the units mentioned are implemented by the CPU 11a executing a predetermined OS program or application program. However, all or some of the functions of the units may be configured from hardware for exclusive use.

The viewing information storage portion 111 stores viewing information indicative of a television viewing state such as, for example, a channel setting, a screen setting and a sound setting at present of the information processing section 11.

The first OS 112 is an OS for controlling the information processing section 11. The first OS 112 is, for example, Windows (registered trademark of Microsoft Corporation).

The cooperation process 113 communicates with the first OS 112 and the general-purpose MPU 15 to carry out processing relating to cooperation between the television functions of the information processing section 11 and the television controlling section 12 Even if the extended television application 114 is not started up, the cooperation process 113 is started up, for example, after start-up of the first OS 112, and then becomes resident.

The extended television application 114 is an application for implementing the television function of the information processing section 11. The extended television application 114 includes functions more abundant than those of the television controlling section 12. In particular, the extended television application 114 includes, in addition to viewing of a television program, functions for recording, video reproduction, video management, acquisition and display of program linkage data distributed by digital broadcasting, and so forth. Those functions which can be utilized by the extended television application 114 include functions corresponding to the button groups A, C and D and the button B of the remote controller 20. The extended television application 114 determines the picture quality of an image to be outputted, the sound quality and so forth based on the viewing information stored in the viewing information storage portion 111. Further, the extended television application 114 updates the setting of the viewing information stored in the viewing information storage portion 111 in response to a command accepted from the remote controller 20 or the like.

The extended television application 114 causes the content reproduction process described above to be executed by the CPU 11a or the wireless processing portion 11e to produce television image information. The extended television application 114 outputs the produced television image information to the monitor controlling section 13.

It is to be noted that the extended television application 114 may be implemented as some function of the first OS 112. Further, the extended television application 114 may have the function of the cooperation process 113.

The television controlling section 12 includes a viewing information storage portion 121, a second OS 122 and a television application 123. Functions of the units mentioned are implemented by the MPU 12a executing a predetermined OS program or application program. However, all or some of the functions of the units may be implemented by hardware for exclusive use.

The viewing information storage portion 121 stores viewing information representative of a television viewing state at present of the television controlling section 12.

The second OS 122 is an OS for controlling the television controlling section 12. The second OS 122 is, for example, an embedded OS. The second OS 122 is started up if the power supply to the television controlling section 12 is turned on.

The television application 123 implements the television function of the television controlling section 12. The television application 123 includes functions simpler and easier than the functions which the extended television application 114 includes. In particular, the television application 123 includes functions for carrying out viewing of a television broadcast. The functions which can be utilized by the television application 123 include functions corresponding to the button group A of the remote controller 20. The television application 123 determines the picture quality of an image to be outputted, the sound quality and so forth based on the viewing information stored in the viewing information storage portion 121. Further, the television application 123 changes the setting of the viewing information stored in the viewing information storage portion 121 in response to a command accepted from the remote controller 20.

The television application 123 causes the MPU 12a to execute the content reproduction process described hereinabove to produce television image information. The television application 123 outputs the produced television image information to the monitor controlling section 13.

The television application 123 is started up by the second OS 122 if the second OS 122 is started up.

It is to be noted that the television application 123 may be implemented as some of the functions of the second OS 122.

The monitor controlling section 13 includes a display changeover portion 131. The display changeover portion 131 changes over the output source of television image information to the monitor 31 to the information processing section 11 or the television controlling section 12 in response to an instruction of the general-purpose MPU 15.

The remote controller controlling section 14 includes a remote controller operation acceptance portion 141. The remote controller operation acceptance portion 141 analyzes an infrared signal received from the remote controller 20 and outputs a command obtained by the analysis to the information processing section 11 or the general-purpose MPU 15. The remote controller controlling section 14 determines the output destination of the command depending upon what device the output source to the monitor 31 is as hereinafter described.

The general-purpose MPU 15 includes a storage section 151 and a cooperation controlling section 152.

The storage section 151 is a storage region for temporarily storing data necessary for processing of the cooperation controlling section 152.

The cooperation controlling section 152 controls, when a command for the instruction to start the extended television application 114 is accepted from the remote controller 20, start--up, that is, cooperative start-up, of the extended television application 114 cooperating with the television controlling section 12. In particular, the cooperation controlling section 152 keeps the television controlling section 12 as the output source to the monitor 31 until outputting of television image information by the extended television application 114 is started after the start-up of the extended television application 114 is completed. Then, after outputting of television image information by the extended television application 114 is started, the cooperation controlling section 152 changes over the output source to the monitor 31 to the information processing section 11. Here, the command for the instruction to start up the extended television application 114 includes a command for the instruction to execute functions which cannot be executed by the television application 123 but can be executed by the extended television application 114.

Upon the cooperation starting, the cooperation controlling section 152 takes over information of an operated button and the viewing state at present of the television application 123 to the extended television application 114. The cooperation controlling section 152 acquires the viewing information from the television application 123 and retains the viewing information into the storage section 151.

Further, the cooperation controlling section 152 acquires the output source at present to the monitor 31 from the display changeover portion 131 and notifies the remote controller operation acceptance portion 141 of the output source at present.

Here, in the following description, a television viewing environment implemented by the extended television application 114 is referred to as extended television, and a television viewing environment implemented by the television application 123 is sometimes referred to as simple television.

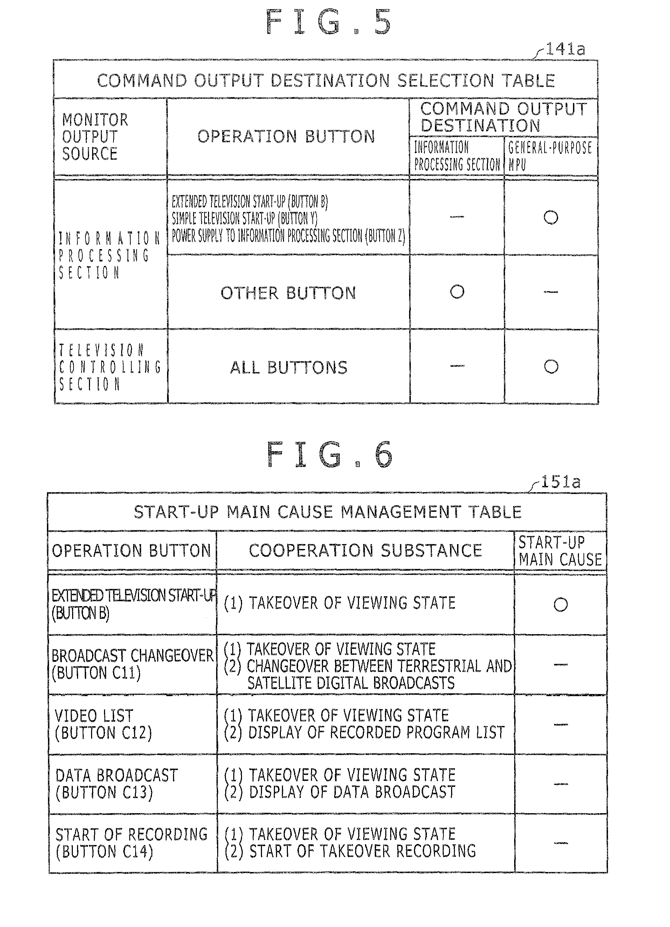

FIG. 5 illustrates an example of a data structure of a command output destination selection table. Referring to FIG. 5, the command output destination selection table 141a defines selection rules of the command output destination by the remote controller operation acceptance portion 141. The command output destination selection table 141a is set in advance in a memory in the MPU 14a.

The command output destination selection table 141a includes items of the monitor output source, operation button and command output destination. Pieces of information arranged in a horizontal direction of each item are associated with each other to represent a selection rule of a command output destination.

In the item of the monitor output source, an output source at present of the monitor 31 is set. In the item of the operation button, information for identifying a button of the remote controller 20 is set. In the item of the command output destination, a device which is to be determined as the output destination of the command, that is, one of the information processing section 11 and the general-purpose MPU 15, is set.

In the command output destination selection table 141a, for example, information that the monitor output source is the "information processing section 11"; the operation button is "extended television start-up (button B)"; simple television start-up (button Y), and power supply to the information processing section (button Z)"; and, with regard to the command output destination, the information processing section 11 is "-" (hyphen) and the general-purpose MPU 15 is "o" (round mark), is set.

This represents that the output source at present to the monitor 31 is the information processing section 11 and, when one of the operation buttons B, Y and Z of the remote controller 20 is operated, a command accepted from the remote controller 20 is outputted to the general-purpose MPU 15.

Further, in the command output destination selection table 141a, for example, information that the monitor output source is the "information processing section 11"; the operation button is "other button"; that is, a button other than the buttons B, Y and Z; and, with regard to the command output destination, the information processing section 11 is "o" (round mark) and the general-purpose MPU 15 is "-" (hyphen), is set.

This represents that the output source at present to the monitor 31 is the information processing section 11 and, when a button other than the operation buttons B, Y and Z of the remote controller 20 is operated, a command accepted from the remote controller 20 is outputted to the information processing section 11.

Further, in the command output destination selection table 141a, for example, information that the monitor output source is the "television controlling section 12"; the operation button is "all buttons"; and, with regard to the command output destination, the information processing section 11 is "-" (hyphen) and the general-purpose MPU 15 is "o" (round mark), is set.

This represents that, if the output destination at present of the monitor 31 is the television controlling section 12, then a command accepted from the remote controller 20 is outputted to the general-purpose CPU 15. Here, also in the case where the information processing section 11 is inoperative because the power supply is off, the remote controller operation acceptance portion 141 outputs a command accepted from the remote controller 20 to the general-purpose MPU 15.

It is to be noted that the remote controller operation acceptance portion 141 can acquire the output source at present to the monitor 31 from the general-purpose MPU 15. For example, the general-purpose MPU 15 and the remote controller controlling section 14 are connected to each other through a general purpose input/output (GPIO) I/F. Then, the general-purpose MPU 15 notifies the remote controller controlling section 14 of the output source at present through a GPIO pin.

FIG. 6 illustrates an example of a data structure of a start-up main cause table. The start-up main cause management table 151a is used to set an operation button in response to which the extended television application 114 is started up. The start-up main cause management table 151a is stored in the storage section 151 and set by the cooperation controlling section 152.

The start-up main cause management table 151a includes items of the operation button, cooperation substance and start-up main cause. Pieces of information arranged in a horizontal direction of each item are associated with each other and represent information relating to one start-up main cause.

In the item of the operation button, information of a button by which cooperation start-up may be caused is set. In the item of the cooperation substance, the substance of a cooperation process caused by each button is set. In the item of the start-up main cause, information representative of by which operation button the current cooperation start-up is caused is set.

In the start-up main cause management table 151a, for example, information that the operation button is "extended television start-up (button B)"; the cooperation substance is "(1) takeover of viewing state"; and the start-up main cause is "o" (round mark), is set. This represents that, if an operation for the button B is accepted in a state in which the extended television application 114 is not started up as yet, then cooperation start-up is carried out with the viewing state taken over. Further, it is represented that the start-up main cause is the button B.

Further, in the start-up main cause management table 151a, for example, information that the operation button is "broadcast changeover (button C11)"; the cooperation substance is "(1) takeover of viewing state, (2) changeover between terrestrial and satellite digital broadcasts"; and the start-up main cause is "-" (hyphen), is set. This represents that, if an operation for the button C11 is accepted in a state in which the extended television application 114 is not started up as yet, then (1) cooperation start-up is carried out with the viewing state taken over and (2) changeover between terrestrial and satellite digital broadcasts is carried out by the extended television application 114 after the start-up. Further, it is represented that the button C11 does not make a start-up main cause.

Further, in the start-up main cause management table 151a, for example, information that the operation button is "video list (button C12)"; the cooperation substance is "(1) takeover of viewing state, (2) display of recorded program list"; and the start-up main cause is "-" (hyphen), is set. This represents that, if an operation for the button C12 is accepted in a state in which the extended television application 114 is not started up as yet, then (1) cooperation start-up is carried out with the viewing state taken over and (2) display of the video list of recorded programs is carried out by the extended television application 114 after the start-up. Further, it is represented that the button C12 does not make a start-up main cause.

Further, in the start-up main cause management table 151a, for example, information that the operation button is "data broadcast (button C13)"; the cooperation substance is "(1) takeover of viewing state, (2) display of data broadcast"; and the start-up main cause is "-" (hyphen), is set. This represents that, if an operation for the button C13 is accepted in a state in which the extended television application 114 is not started up as yet, then (1) cooperation start-up is carried out with the viewing state taken over and (2) display of the data broadcast is carried out by the extended television application 114 after the start-up. Further, it is represented that the button C13 does not make a start-up main cause.

Further, in the start-up main cause management table 151a, for example, information that the operation button is "start of recording (button C14)"; the cooperation substance is "(1) takeover of viewing state, (2) start of takeover recording"; and the start-up main cause is "-" (hyphen), is set. This represents that, if an operation for the button C14 is accepted in a state in which the extended television application 114 is not started up as yet, then (1) cooperation start-up is carried out with the viewing state taken over and (2) recording of a television program is carried out by the extended television application 114 after the start-up. Further, it is represented that the button C14 does not make a start-up main cause.

Here, also it is possible to set to the start-up main cause management table 151a which viewing state is to be taken over in association with each operation button. For example, in association with the button C14 for the start of recording, it is possible to set such that the channel setting is taken over, but in association with the button C12 for the video list, it is possible to set such that the channel setting is not taken over.

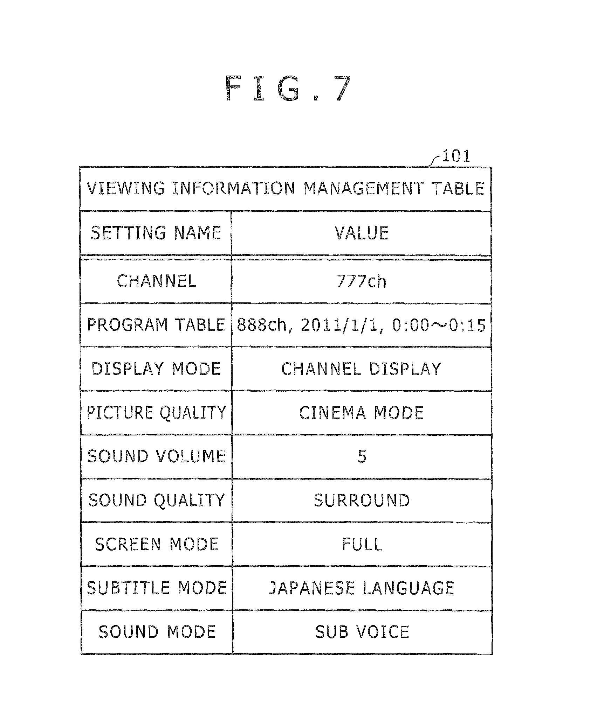

FIG. 7 illustrates an example of a data structure of a viewing information management table. Referring to FIG. 7, the viewing information management table 101 is stored in the viewing information storage portions 111 and 121 and the storage section 151. Here, the viewing information management table 101 stored in the viewing information storage portion 111 is setting information which is referred to by the extended television application 114 and is used for production of television image information. The viewing information management table 101 stored in the viewing information storage portion 121 is setting information which is referred to by the television application 123 and is used for production of television image information. The viewing information management table 101 stored in the storage section 151 is setting information stored for the takeover upon cooperation start-up by the cooperation controlling section 152.

The viewing information management table 101 includes items of setting name and value. Pieces of information arranged in a horizontal direction of each item are associated with each other to represent the substance of one setting of the viewing state.

In the item of the setting name, the name of the setting is set. In the item of the value, a set value is set.

In the viewing information management table 101, for example, information that the setting name is "channel" and the value is "777ch" is set. This represents that television image information is being produced at present in regard to a television program of the channel 777.

Further, in the viewing information management table 101, for example, information that the setting name is "program table" and the value is "888ch, 2011/1/1, 0:00 ∼ 0:15" is set. This represents that a program is being displayed and a program field of 0:00 to 0:15, January 1, 2011 of the channel 888 is being focused. If a program table is not being displayed, then the item indicates that there is no setting.

Further, in the viewing information management table 101, for example, information that the setting name is "display mode" and the value is "channel display" is set. This represents that the channel display is set to an on state as the display mode of a television program. The channel display is a display mode in which the channel number is displayed in a superimposed relationship with the program image.

Further, in the viewing information management table 101, for example, information that the setting name is "picture quality" and the value is "cinema mode" is set. This represents that the picture quality at present is a mode called cinema mode. In regard to the picture quality, it is possible to set, for example, the brightness of the backlight, the brightness of a color, the density of the color and so forth. The cinema mode indicates that setting suitable for a cinema is made. Also it is possible to otherwise set a default picture quality mode or set a custom mode which allows customization by the user.

Further, in the viewing information management table 101, for example, information that the setting name is "sound volume" and the value is "5" is set. This represents that the level of the sound volume at present is the fifth among, for example, 10 stages.

Further, in the viewing information management table 101, for example, information that the setting name is "sound quality" and the value is "surround" is set. This represents that, as the level of the sound quality at present, surround from among dynamic, normal and surround is selected. In regard to the "sound quality," it is possible to otherwise set a speaker to be used and the number of speakers to be used.

Further, in the viewing information management table 101, for example, information that the setting name is "screen mode" and the value is "full" is set. This represents that, as the screen mode at present, the full mode is selected. As other modes than the full mode, such screen modes as, for example, the normal mode (without working), the zoom mode (enlargement) and so forth are available as described hereinabove.

Further, in the viewing information management table 101, for example, information that the setting name is "subtitle mode" and the value is "Japanese language" is set. This represents that, as the subtitle mode at present, display of the Japanese language is on. As other subtitle modes, it is possible to set the English language or any other language.

Further, in the viewing information management table 101, for example, information that the setting name is "sound mode" and the value is "sub voice" is set. This represents that the sub voice is selected as the sound mode to be outputted at present. Also it is possible to otherwise select the main voice or both of the main voice and the sub voice.

Now, a processing procedure of the information processing apparatus 10 having the configuration described above is described.

Here, it is assumed that the information processing section 11 can assume a plurality of sleep states prescribed by ACPI (Advanced Configuration and Power Interface) by a power saving function of the first OS 112. More particularly, the information processing section 11 supports the following states:
(1) Run state in which the power supply is on (S0 state of ACPI);
(2) Standby or sleep state in which, although the power supply to some device is stopped, the power supply to the RAM 11c is continued thereby to allow high speed returning (S3 state of ACPI);
(3) Rest or sleep state in which, after data of the RAM 11c are saved into the HDD 11d, the power supply to the devices including the RAM 11c is stopped and returning from the HDD 11d is permitted (S4 state of ACPI); and
(4) Stopping or soft-off state in which the power supply is off (S5 state of ACPI).

The cooperation controlling section 152 carries out cooperation control in response to the states described above of the information processing section 11. In the following, the processing procedure is described in detail. It is to be noted that, before the following processing procedure is started, either the information processing apparatus 10 is utilized for television viewing by the simple television or the television controlling section 12 is in a power supply off state. Further, in any state, the extended television application 114 is not started up as yet.

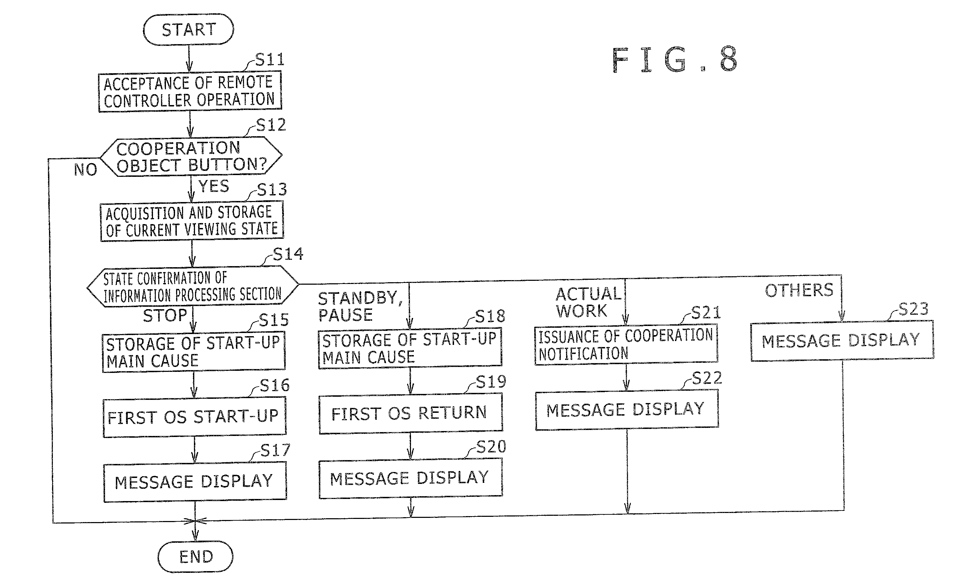

FIG. 8 is a flow chart illustrating the cooperation starting process. In the following, the process illustrated in FIG. 8 is described in accordance with step numbers.

### Step S11

The remote controller operation acceptance portion 141 receives an infrared signal from the remote controller 20. The remote controller operation acceptance portion 141 acquires a command corresponding to the infrared signal. The remote controller operation acceptance portion 141 determines an output destination of the command based on the rules set in the command output destination selection table 141a. Here, since the monitor output source at present is the television controlling section 12, the remote controller operation acceptance portion 141 outputs the command to the general-purpose MPU 15.

### Step S12

The cooperation controlling section 152 acquires a command from the remote controller operation acceptance portion 141. The cooperation controlling section 152 decides whether or not the command corresponds to a cooperation object button, that is, whether or not the command is a cooperation command. The cooperation object button is any of the buttons defined in the start-up main cause management table 151a. In particular, the cooperation object button is one of the button B and the buttons C11 to C14. If the command corresponds to a cooperation object command, the cooperation controlling section 152 controls the display changeover portion 131 to set the output source to the monitor 31 to the television controlling section 12, and then the processing advances to step S13. At this time, if the simple television is viewed, then the television controlling section 12 is maintained as the output source. On the other hand, if the power supply to the television controlling section 12 is off, then the power supply is turned on. If the acquired command does not correspond to the cooperation object buttons, then the processing is ended.

### Step S13

The cooperation controlling section 152 inquires the television application 123 of the viewing state at present. The television application 123 refers to the viewing information management table 101 stored in the viewing information storage portion 121 and issues a response of the viewing state to the cooperation controlling section 152. The cooperation controlling section 152 stores the viewing information management table 101 into the storage section 151.

### Step S14

The cooperation controlling section 152 confirms the power saving state of the information processing section 11. If the information processing section 11 is in the stopping state, that is, in the S5 state of ACPI, then the processing advances to step S15. If the information processing section 11 is in the standby state or S3 state of ACPI or in the rest state or S4 state of ACPI, then the processing advances to step S18. If the information processing section 11 is in the run state or S0 state of ACPI, then the processing advances to step S21. When the information processing section 11 is in any other state, the processing advances to step S23. The determination of any other state may be made in the case where the state of the information processing section 11 cannot be confirmed or in the case where an OS different from the first OS 112 is started up in the information processing section 11 by a boot loader or the like.

### Step S15

The cooperation controlling section 152 stores the start-up main cause. For example, if the accepted cooperation command corresponds to the button B, then the flag of the item of the start-up main cause regarding the button B is set to an on state, as represented by a round mark in the example of FIG. 6, in the start-up main cause management table 151a.

### Step S16

The cooperation controlling section 152 turns on the power supply to the information processing section 11 to start start-up of the first OS 112. After the start-up of the first OS 112 is completed, the first OS 112 starts up the cooperation process 113.

### Step S17

The cooperation controlling section 152 instructs the display changeover portion 131 to display a predetermined message. This message notifies the user that the first OS 112 is being started up. The display changeover portion 131 causes the monitor 31 to display the message.

### Step S18

The cooperation controlling section 152 stores the start-up main cause similarly as at step S15.

### Step S19

The cooperation controlling section 152 resumes supply of power to the devices in the information processing section 11 to which power supply has been stopped thereby to start returning of the first OS 112. It is to be noted that, after the start-up of the first OS 112 is completed, the first OS 112 starts up the cooperation process 113.

### Step S20

The cooperation controlling section 152 instructs the display changeover portion 131 to display a predetermined message. This message notifies the user that the first OS 112 is being returned. The display changeover portion 131 causes the monitor 31 to display the message.

### Step S21

The cooperation controlling section 152 issues a cooperation notification to the cooperation process 113. The cooperation notification instructs the cooperation process 113 to start cooperation start-up of the extended television application 114. The cooperation notification includes the cooperation command acquired from the remote controller operation acceptance portion 141.

### Step S22

The cooperation controlling section 152 instructs the display changeover portion 131 to display a predetermined message. This message notifies the user that the extended television application 114 is being started up. The display changeover portion 131 causes the monitor 31 to display the message.

### Step S23

The cooperation controlling section 152 instructs the display changeover portion 131 to display the predetermined message. This message notifies the user that the accepted command cannot be executed in the current environment. The display changeover portion 131 causes the monitor 31 to display the message.

In the manner, if an operation of a cooperation object button is carried out on the remote controller 20, then the information processing apparatus 10 starts cooperation start-up.

It is to be noted that, if it is decided at step S12 that the command does not correspond to any cooperation object button, then such a process as described in the following may thereafter be carried out. In particular, if a command corresponding to the button group A is accepted, then the cooperation controlling section 152 outputs the command to the television controlling section 12 so as to execute a corresponding function. On the other hand, if a command corresponding to the button group D is accepted, then the cooperation controlling section 152 instructs the display changeover portion 131 to display a message that the simple television being utilized at present cannot utilize a function corresponding to the button group D.

That the display changeover portion 131 displays various messages on the monitor 31 utilizing the OSD function to notify the user of a situation of the information processing apparatus 10 has been described with reference to FIG. 8. Here, examples of the messages are described.

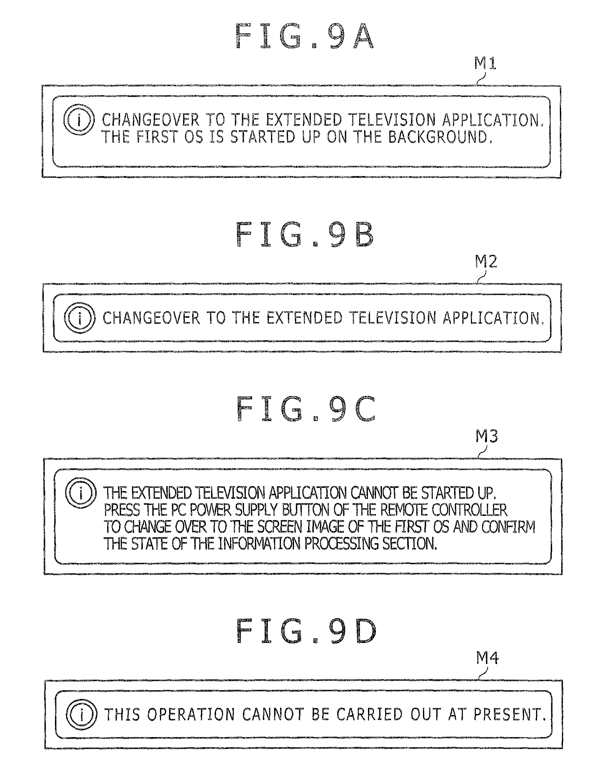

FIGS. 9A to 9D illustrate an example of the messages. In particular, FIG. 9A illustrates a message window M1 to be displayed on the monitor 31 at steps S17 and S20 of FIG. 8. In the message window M1, a message "Changeover to the extended television application. The first OS is started up on the background" is included. It is to be noted that, although it has been described that the same message is displayed upon start-up and returning of the first OS 112, different messages may otherwise be displayed. For example, such a message as changeover to the extended television application. The first OS is returned on the background." may be displayed.

FIG. 9B illustrates the message window M2 to be displayed on the monitor 31 at step S22 of FIG. 8. The message window M2 includes a message changeover to the extended television application."

FIG. 9C illustrates a message window M3 to be displayed on the monitor 31 at step S23 of FIG. 8. The message window M3 includes a message "The extended television application cannot be started up. Press the PC power supply button of the remote controller to change over to the screen image of the first OS and confirm the state of the information processing section."

FIG. 9D illustrates a message window M4 which can be displayed on the monitor 31 when it is decided at step S12 of FIG. 8 that an operation of the button group D is accepted. The message window M4 includes a message "This operation cannot be carried out at present."

In this manner, the cooperation controlling section 152 and the display changeover portion 131 can notify the user of a situation at present by displaying various messages on the monitor 31 in response to various states of the information processing section 11. As illustrated by the message window M3, when a normal operation or an operation intended by the user cannot be carried out, if a dealing method with the situation such as a confirmation instruction for a predetermined device is included in the message, then this is particularly convenient to the user.

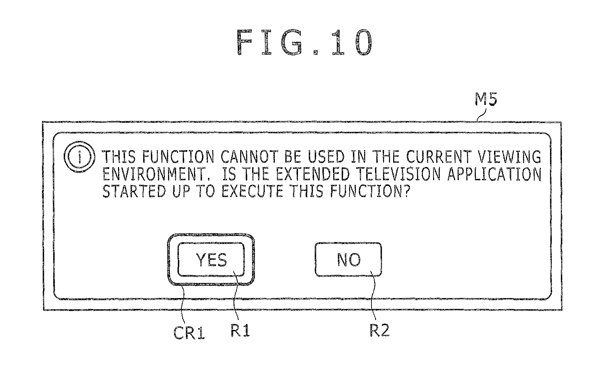

FIG. 10 shows another example of a message. A message window M5 can be displayed on the monitor 31 immediately after step S12 of FIG. 8 in order to confirm to the user whether or not start-up may be started.

The message window M5 includes a message "This function cannot be used in the current viewing environment. Is the extended television application stared up to execute this function?", confirmation buttons R1 and R2, and a cursor CR1.

By displaying the message window M5 on the monitor 31, the following modification may be applied as a process of the cooperation controlling section 152 before the processing advances from step S12 to step S13.

In particular, before the processing advances from step S12 to step S13, the cooperation controlling section 152 instructs the display changeover portion 131 to display the message window M5. Consequently, the display changeover portion 131 causes the message window M5 to be displayed on the monitor 31.

The user would operate, for example, the button A25 of the remote controller 20 to move the cursor CR1 to select one of the confirmation buttons R1 and R2. After the selection, the user would press the button A26 to input the selection substance to the information processing apparatus 10. Then, if the cooperation controlling section 152 accepts the selection input of the confirmation button R1, then it advances the processing to step S13. On the other hand, if the selection input of the confirmation button R2 is accepted, then the cooperation controlling section 152 ends the processing.

If a confirmation of the operation of the user is taken in this manner, then even if the user should operate a cooperation object button in error, coordination start-up can be suppressed from being started in response to the operation.

Now, a processing procedure of the information processing apparatus 10 after start-up or returning of the first OS 112 is completed at step S16 or S19 of FIG. 8 is described. If start-up or returning of the first OS 112 is completed, then the cooperation process 113 is started up by the first OS 112. The following process is started in response to completion of the start-up of the cooperation process 113.

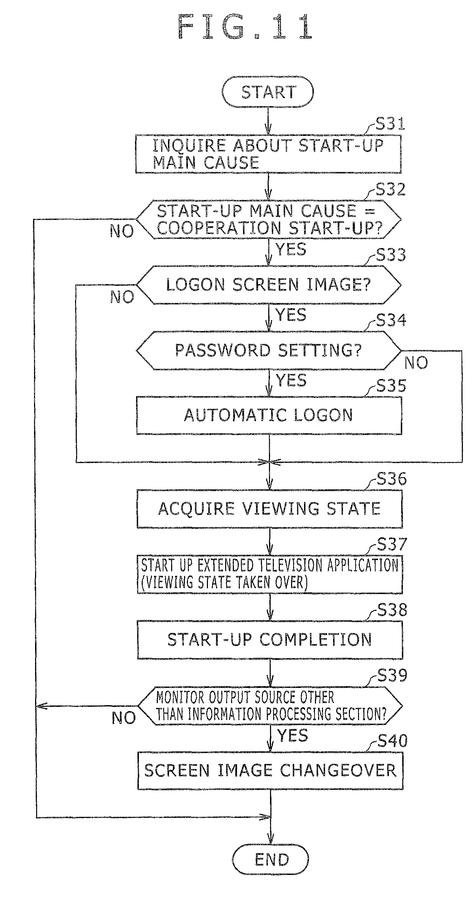

FIG. 11 is a flow chart illustrating first display changeover control. In the following, the process illustrated in FIG. 11 is described in accordance with step numbers.

### Step S31

The cooperation process 113 inquires the cooperation controlling section 152 of a start-up main cause. The cooperation controlling section 152 refers to the start-up main cause management table 151a stored in the storage section 151 and issues a response regarding what button has made a start-up main cause to the cooperation process 113. It is to be noted that the start-up main cause may not originate from the cooperation object buttons such as, for example, a case in which only start-up of the information processing section 11 is carried out. In this instance, the cooperation controlling section 152 may possibly issue a response of a start-up main cause different from those set in the start-up main cause management table 151a.

### Step S32

The cooperation process 113 decides whether or not the start-up main cause has arisen from a cooperation object button and hence the start-up is cooperation start-up. If the start-up is cooperation start-up, then the processing advances to step S33. On the other hand, if the start-up is not coordination start-up, then the processing is ended.

### Step S33

The cooperation process 113 inquires the first OS 112 of in which screen state the screen image of the first OS 112 is and decides whether or not the screen image of the first OS 112 is a logon screen image. If the screen image of the first OS 112 is a logon screen image, then the processing is advanced to step S34. If the screen image of the first OS 112 is not a logon screen image, then the processing advances to step S36. Here, the logon screen is a screen for user authentication of the first OS 112. In particular, in order to enable utilization of the first OS 112 upon start-up or returning of the first OS 112, the logon screen asks the user to input a user ID (Identifier) and/or a password.

### Step S34

The cooperation process 113 decides whether or not a setting of a password for the user ID for the logon is available. If a password setting is available, then the processing is advanced to step S35. On the other hand, if no password setting is available, then the processing advances to step S36. It is to be noted that the user can set a user ID and a password for the logon in advance to the cooperation process 113 as authentication information when the extended television is started up. The setting substance can be stored, for example, in the RAM 11c or the HDD 11d in advance. It is to be noted that the user ID and the password may be designated in advance in the first OS 112.

### Step S35

The cooperation process 113 uses the user ID and the password to carry out a logon process of the first OS 112.

### Step S36

After the logon process is completed, the cooperation process 113 inquires the cooperation controlling section 152 of a viewing state. Consequently, the cooperation controlling section 152 inquires the television application 123 of a viewing state at present to acquire a viewing state at present, that is, the latest viewing state. The cooperation controlling section 152 issues a response of the viewing state to the cooperation process 113. It is to be noted that the cooperation controlling section 152 may not possibly acquire a viewing state from the television application 123 from a main cause that the user has turned off the power supply to the television controlling section 12 or from a like cause. In this instance, the cooperation controlling section 152 refers to the viewing information management table 101 stored in the storage section 151 to acquire a viewing state and issues a response of the viewing state to the cooperation process 113.

### Step S37

The cooperation process 113 starts start-up of the extended television application 114. At this time, the cooperation process 113 inputs various settings relating to the viewing state acquired from the cooperation controlling section 152 to the extended television application 114. In other words, the viewing state of the simple television is taken over to the extended television. Further, the cooperation process 113 inputs an acquired cooperation command to the extended television application 114.

### Step S38

If the start-up is completed and outputting of television image information is enabled, then the extended television application 114 notifies the cooperation process 113 of this. The cooperation process 113 detects the completion of the start-up of the extended television application 114 through the notification. Here, the extended television, application 114 starts, after the start-up, outputting of television image information in a state in which it takes over the viewing state. Then, the extended television application 114 executes a function corresponding to the cooperation command inputted by the cooperation process 113.

### Step S39

The cooperation process 113 inquires the cooperation controlling section 152 of the output source to the monitor 31 at present. Then, the cooperation process 113 decides whether or not the output source to the monitor 31 at present is any other than the information processing section 11, in the present example, is the television controlling section 12. If the output source to the monitor 31 is any other than the information processing section 11, then the processing advances to step S40. On the other hand, if the output source to the monitor 31 is the information processing section 11, then the processing is ended.

### Step S40

The cooperation process 113 instructs the cooperation controlling section 152 to change over the output source to the monitor 31 to the information processing section 11. The cooperation controlling section 152 outputs a changeover instruction to the display changeover portion 131 in response to the instruction. Consequently, the display changeover portion 131 changes over the output source to the monitor 31 to the information processing section 11. The monitor controlling section 13 controls the monitor 31 to display a message for the notification that the output source is changed over to the information processing section 11.

In this manner, if outputting of television image information by the extended television application 114 is enabled, then the cooperation process 113 and the cooperation controlling section 152 change over the output source to the monitor 31 from the television controlling section 12 to the information processing section 11. It is to be noted that, if the output source to the monitor 31 has already been set to the information processing section 11, for example, by an operation of the user at a point of time at step S39, then the state is maintained.

Thereupon, the cooperation command corresponding to the viewing state of the television controlling section 12 and the start-up main cause is taken over to the extended television application 114.

Further, after the output source to the monitor 31 is changed over to the information processing section 11 at step S40, the cooperation controlling section 152 may turn off the power supply to the television controlling section 12. This can achieve power saving.

Further, if the takeover substance according to the start-up main cause is designated in the start-up main cause management table 151a at step S36, then the cooperation controlling section 152 may issue a response only of the designated takeover substance to the cooperation process 113.

Further, at step S35, the logon process may possibly result in failure. In this instance, the cooperation process 113 may instruct the cooperation controlling section 152 to change over the output source to the monitor 31 to the information processing section 11. If this instruction is issued, then it is possible to present the logon screen image to urge the user to input its user ID and/or password. Further, the processing may be resumed at step S36 after the logon results in success.

Now, a particular example of a flow of cooperation control described hereinabove with reference to FIGS. 8 and 11. It is to be noted that, before the following processing procedure is started, either the information processing apparatus 10 is utilized for television viewing by the simple television or the television controlling section 12 is in a power supply off state similarly as in the case of FIG. 8. Further, it is assumed that the information processing section 11 is in the power supply off state or S5 state of ACPI. However, even if the information processing section 11 is in the S3 or S4 state of ACPI, the flow of cooperation control is similar to that described below.

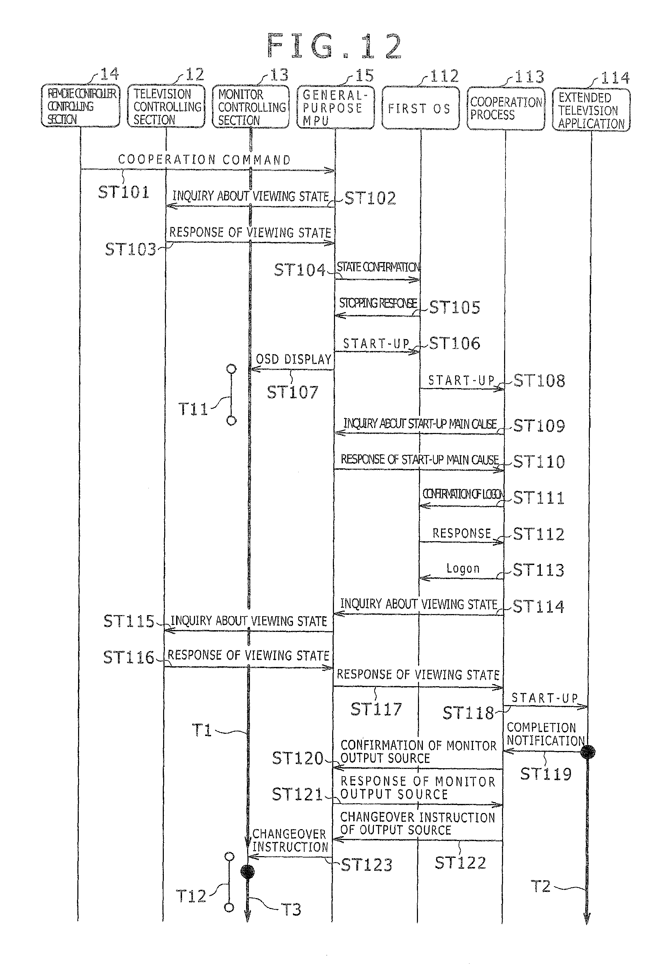

FIG. 12 is a sequence diagram illustrating first cooperation control. In the following, the process illustrated in FIG. 12 is described in accordance with step numbers.

### Step ST101

The remote controller controlling section 14 receives a cooperation command corresponding to a cooperation object command from the remote controller 20. The remote controller controlling section 14 outputs the cooperation command to the general-purpose MPU 15.

### Step ST102

The general-purpose MPU 15 accepts the cooperation command and controls the monitor controlling section 13 to set the output source to the monitor 31 to the television controlling section 12. In this instance, if the output source originally is the television controlling section 12, then this state is maintained. At this time, it is confirmed whether or not the power supply to the television controlling section 12 is off, and if the power supply is off, then the general-purpose MPU 15 turns on the power supply to the television controlling section 12. Then, the general-purpose MPU 15 inquires the television controlling section 12 of a viewing state.

### Step ST103

The television controlling section 12 refers to the viewing information management table 101 stored in the viewing information storage portion 121 and issues a response of the viewing state to the general-purpose MPU 15.

### Step ST104

The general-purpose MPU 15 inquires about a power saving state of the first OS 112.

### Step ST105

The first OS 112 issues a response that it is in the stopping state or S5 state of ACPI. It is to be noted that, if a predetermined response is not acquired from the information processing section 11, then the general-purpose MPU 15 may decide that the first OS 112 is in the stopping state. The general-purpose MPU 15 stores the start-up main cause.

### Step ST106

The general-purpose MPU 15 turns on the power supply to the information processing section 11 and starts start-up of the first OS 112.

### Step ST107

The general-purpose MPU 15 instructs the monitor controlling section 13 to display the message window M1. The monitor controlling section 13 controls the monitor 31 to display the message window M1 by the OSD function. The message window M1 continues to be displayed on the monitor 31, for example for a period T11.

### Step ST108

The first OS 112 completes the start-up. Then, the first OS 112 starts up the cooperation process 113.

### Step ST109

The cooperation process 113 completes the start-up. Then, the cooperation process 113 inquires the general-purpose MPU 15 of a start-up main cause.

### Step ST110

The general-purpose MPU 15 issues a response of the start-up main cause to the cooperation process 113.

### Step ST111

The cooperation process 113 inquires the first OS 112 of a screen image state in order to carry out cooperation start-up and confirms whether or not the screen image state at present is the logon screen image.

### Step ST112

The first OS 112 issues a response that the screen image at present is the logon screen image to the cooperation process 113.

### Step ST113

The cooperation process 113 acquires settings of a user ID and a password for the logon and executes a logon process for the first OS 112.

### Step ST114

The cooperation process 113 inquires the general-purpose MPU 15 of a viewing state.

### Step ST115

The general-purpose MPU 15 inquires the television controlling section 12 of a viewing state.

### Step ST116

The television controlling section 12 refers to the viewing information management table 101 stored in the television controlling section 12 to issue a response of the viewing state to the general-purpose MPU 15.

### Step ST117

The general-purpose MPU 15 issues a response of the viewing state to the cooperation process 113.

### Step ST118

The cooperation process 113 starts up the extended television application 114. At this time, the cooperation process 113 takes over the acquired viewing state to the extended television application 114. Further, the cooperation process 113 outputs a cooperation command corresponding to the start-up main cause to the extended television application 114.

### Step ST119

The extended television application 114 completes the start-up. The extended television application 114 starts outputting of television image information in the viewing state inputted by the cooperation process 113. Further, the extended television application 114 executes a function corresponding to the cooperation command inputted by the cooperation process 113.

### Step ST120

The cooperation process 113 inquires the general-purpose MPU 15 of whether or not the output source to the monitor 31 is the information processing section 11.

### Step ST121

The general-purpose MPU 15 issues a response that the output source to the monitor 31 is the television controlling section 12 to the cooperation process 113.

### Step ST122

The cooperation process 113 outputs a changeover instruction of the output source to the general-purpose MPU 15.

### Step ST123

The general-purpose MPU 15 outputs the changeover instruction of the output source to the monitor controlling section 13. The monitor controlling section 13 changes over the output source to the monitor 31 from the television controlling section 12 to the information processing section 11. At this time, the general-purpose MPU 15 issues an instruction to display a message for the notification that the output source of the screen image has been changed over to the information processing section 11. The monitor controlling section 13 controls the monitor 31 to display the message by the OSD function. The message continues to be displayed on the monitor 31, for example, for a period T12.

The cooperation control in the case where the information processing section 11 is in the stopping state or S5 state of ACPI is carried out in this manner. In particular, when start-up of the extended television is accepted, the extended television application 114 is started up and the output source to the monitor 31 remains the television controlling section 12 until the extended television application 114 is started to enable outputting of television image information by the extended television application 114 (corresponding to a period T1). Then, if the extended television application 114 is started up and outputting of television image information is enabled by the extended television application 114 (corresponding to a period T2), then the output source to the monitor 31 is changed over to the information processing section 11 (corresponding to a period T3).

Consequently, the waiting time till starting of viewing of an image by the information processing apparatus 10 can be reduced. In particular, since the time is filled in with television image information of the simple television which can be started up quickly until television viewing is enabled by the extended television, the user can quickly start television viewing rapidly. As a result, the cumbersomeness in waiting till starting of viewing can be reduced.

Further, even in such a case that the simple television is being viewed already, the television viewing based on the simple television is continued until television viewing based on the extended television is enabled, and then at a timing at which television viewing based on the extended television is enabled, changeover to the extended television is carried out. Therefore, interruption of television viewing of the user can be suppressed.

Further, upon changeover, the cooperation process 113 and the cooperation controlling section 152 take over the viewing state of the simple television to the extended television. Further, the cooperation process 113 and the cooperation controlling section 152 cause the extended television after the start-up to execute a function corresponding to the cooperation command which has made the start-up main cause.

Consequently, even if the simple television and the extended television are different in channel setting and so forth from each other, viewing of the extended television can be started in the common viewing state. In other words, the labor and time for carrying out re-setting and re-operation relating to the channel, image and sound on the extended television side can be omitted. Therefore, the convenience to the user is high. Further, since a disagreeable feeding caused by a difference in picture quality, sound quality or the like across the changeover can be suppressed, smooth changeover can be achieved.

Here, the principal coordination substance which can be executed by the extended television are such as described hereinabove in the description of the start-up main cause management table 151a of FIG. 6. For example, if the button C14 for the start of recording is the start-up main cause, then recording of a taken over channel is started by the extended television.

Meanwhile, principal viewing states to be taken over are such as described hereinabove in the description of the viewing information management table 101 of FIG. 7. For example, if set values of a program table are taken over, then also on the extended television side, a state in which the program table is displayed based on the set values is established. In particular, a state in which a television program field of a channel, a date and a time zone of the set values is focused on the program table is established. If a television program can be displayed in a small window in the program table, then a television program of a channel corresponding to the set value for the channel is displayed in the small window. Also the other information such as the information of the picture quality, sound volume sound quality and subtitle is taken over similarly.

Furthermore, since, when the general-purpose MPU 15 acquires a cooperation command, it inquires the television controlling section 12 of a viewing state in advance and then stores the viewing state into the storage section 151, even if a response is not obtained at step ST116, a viewing state can be acquired from the storage section 151.

Here, the user may change a setting on the simple television side during start-up of the extended television. Therefore, it is desirable to acquire information of the viewing state as late as possible. Therefore, the general-purpose MPU 15 may periodically inquire the television controlling section 12 of a viewing state also after step ST102. If such inquiry is carried out periodically in this manner, then even if a response, for example, at step ST116 cannot be obtained, the general-purpose MPU 15 can acquire viewing information as late as possible from the storage section 151 and issue a response to the cooperation process 113 at step ST117.

Now, a processing procedure of the information processing apparatus 10 after a cooperation notification is outputted from the cooperation controlling section 152 at step S21 in FIG. 8 is described.

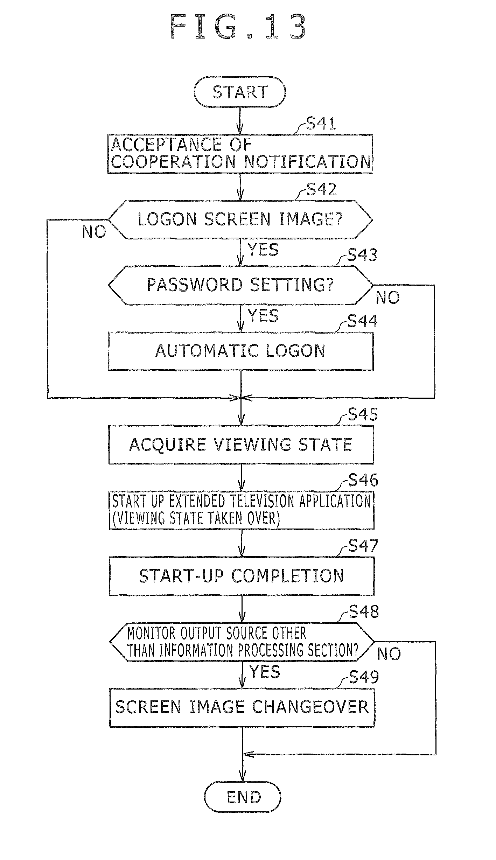

FIG. 13 is a flow chart illustrating second display changeover control. In the following, the process illustrated in FIG. 13 is described in accordance with step numbers.

### Step S41

The cooperation process 113 accepts a cooperation notification from the cooperation controlling section 152.

### Step S42

The cooperation process 113 inquires the first OS 112 of in which screen image state the first OS 112 is at present and decides whether or not the screen image of the first OS 112 is the logon screen image. If the screen image of the first OS 112 is the logon screen image, then the processing advances to step S43. If the screen image of the first OS 112 is not the logon screen image, then the processing advances to step S45.

### Step S43

The cooperation process 113 decides whether or not a setting of a password for the user ID for the logon is available. If a password setting is available, then the processing advances to step S44. If no password setting is available, then the processing advances to step S45.

### Step S44

The cooperation process 113 carries out a logon process of the first OS 112 using the user ID for the logon and the password.

### Step S45

When the logon process is completed, the cooperation process 113 inquires the cooperation controlling section 152 of viewing information. The cooperation controlling section 152 inquires the television application 123 of viewing information at present to acquire the latest viewing information. The cooperation controlling section 152 issues a response of the viewing information to the cooperation process 113. It is to be noted that the cooperation controlling section 152 may possibly fail to obtain a response of viewing information from the television application 123 from a main cause that the user has turned off the power supply to the television controlling section 12 or the like. In this instance, the cooperation controlling section 152 refers to the viewing information management table 101 stored in the storage section 151 and issues a response of the setting substance of the viewing information management table 101 to the cooperation process 113.

### Step S46

The cooperation process 113 starts start-up of the extended television application 114. At this time, the cooperation process 113 inputs the viewing information acquired from the cooperation controlling section 152 to the extended television application 114. In other words, the viewing state of the simple television is taken over to the extended television. Further, the cooperation process 113 inputs the command acquired as the cooperation notification to the extended television application 114.

### Step S47

When the start-up is completed and outputting of television image information is enabled, the extended television application 114 notifies the cooperation process 113 of this. The cooperation process 113 detects the completion of the start-up of the extended television application 114 from the notification. Here, the extended television application 114 starts outputting of television image information in the state in which the viewing state is taken over after the start-up. Then, the extended television application 114 executes a function corresponding to the command inputted from the cooperation process 113.

### Step S48

The cooperation process 113 inquires the cooperation controlling section 152 of the output source to the monitor 31 at present. Then, the cooperation process 113 decides whether or not the output source to the monitor 31 at present is any other than the information processing section 11, which is, in the present example, is the television controlling section 12. If the output source to the monitor 31 is any other than the information processing section 11, then the processing advances to step S49. However, if the output source to the monitor 31 is the information processing section 11, then the processing is ended.

### Step S49

The cooperation process 113 instructs the cooperation controlling section 152 to change over the output source to the monitor 31 to the information processing section 11. The cooperation controlling section 152 outputs a changeover instruction to the display changeover portion 131 in response to the instruction. Consequently, the display changeover portion 131 changes over the output source to the monitor 31 to the information processing section 11.

In this manner, if outputting of television image information by the extended television application 114 is enabled, then the cooperation process 113 and the cooperation controlling section 152 change over the output source to the monitor 31 from the television controlling section 12 to the information processing section 11. It is to be noted that, if the output source to the monitor 31 has already been set to the information processing section 11, for example, by an operation of the user at the point of time of the step S48, then this state is maintained.

Further, similarly to the processing procedure of FIG. 11, the cooperation controlling section 152 may turn off the power supply to the television controlling section 12 after the output source to the monitor 31 is changed over to the information processing section 11 at step S48. Power saving can be anticipated thereby.

Further, if the takeover substance corresponding to the command is designated by the start-up main cause management table 151a at step S45 described hereinabove, then the cooperation controlling section 152 may issue a response only of the designated takeover substance to the cooperation process 113.

Now, a particular example of the flow of cooperation control described hereinabove with reference to FIGS. 8 and 13 is described. It is to be noted that, before the following processing procedure is started, either the information processing apparatus 10 is utilized for television viewing by the simple television or the television controlling section 12 is in a power supply off state similarly as in the case of FIG. 8. Further, although the information processing section 11 is in the power-on operating state or S0 state of ACPI, the extended television application 114 is not started up as yet.

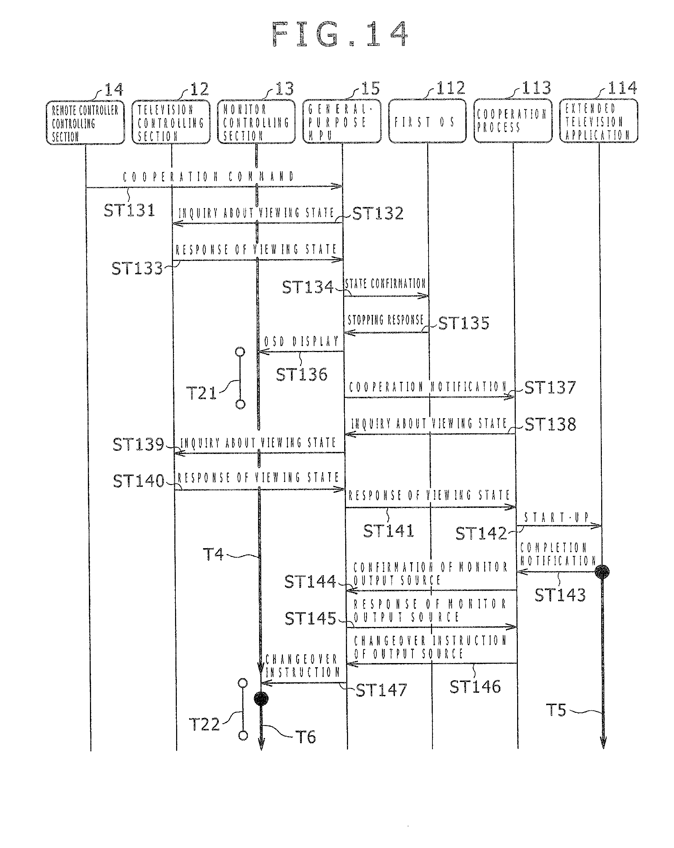

FIG. 14 is a sequence diagram illustrating second cooperation control. In the following, the process illustrated in FIG. 14 is described in accordance with step numbers.

### Step ST131

The remote controller controlling section 14 receives a cooperation command from the remote controller 20. The remote controller controlling section 14 outputs the cooperation command to the general-purpose MPU 15.

### Step ST132

The general-purpose MPU 15 accepts the cooperation command and controls the monitor controlling section 13 to set the output source to the monitor 31 to the television controlling section 12. In this instance, if the simple television is being viewed, then the output source is maintained. At this time, the general-purpose MPU 15 confirms whether or not the power supply to the television controlling section 12 is off, and if the power supply is off, then the general-purpose MPU 15 turns on the power supply to the television controlling section 12. Then, the general-purpose MPU 15 inquires the television controlling section 12 of a viewing state.

### Step ST133

The television controlling section 12 refers to the viewing information management table 101 stored in the viewing information storage portion 121 to issue a response of the viewing state to the general-purpose MPU 15.

### Step ST134

The general-purpose MPU 15 inquires the first OS 112 of a power saving state.

### Step ST135

The first OS 112 issues a response that it is in the operating state or S0 state of ACPI.

### Step ST136

The general-purpose MPU 15 instructs the monitor controlling section 13 to display the message window M2. The monitor controlling section 13 controls the monitor 31 to display the message window M2 by the OSD function. The message window M2 continues to be displayed on the monitor 31, for example, for a period T21.

### Step ST137

The general-purpose MPU 15 outputs a cooperation notification to the cooperation process 113. The cooperation notification includes the cooperation command acquired at step ST131.

### Step ST138

The cooperation process 113 acquires the cooperation notification and inquires the general-purpose MPU 15 of a viewing state.

### Step ST139

The general-purpose MPU 15 inquires the television controlling section 12 of a viewing state.

### Step ST140

The television controlling section 12 refers to the viewing information management table 101 stored in the viewing information storage portion 121 to issue a response of the viewing state to the general-purpose MPU 15.

### Step ST141

The general-purpose MPU 15 issues a response of the viewing state to the cooperation process 113.

### Step ST142

The cooperation process 113 starts up the extended television application 114. At this time, the cooperation process 113 takes over the acquired viewing state to the extended television application 114. Further, the cooperation process 113 outputs a cooperation command to the extended television application 114.

### Step ST143

The extended television application 114 completes the start-up. The extended television application 114 starts outputting of television image information in the viewing state inputted from the cooperation process 113. Further, the extended television application 114 executes a function corresponding to the cooperation command inputted from the cooperation process 113.

### Step ST144

The cooperation process 113 inquires the general-purpose MPU 15 of whether or not the output source to the monitor 31 is the information processing section 11.

### Step ST145

The general-purpose MPU 15 issues a response that the output source to the monitor 31 is the television controlling section 12 to the cooperation process 113.

### Step ST146

The cooperation process 113 outputs a changeover instruction of the output source to the general-purpose MPU 15.

### Step ST147

The general-purpose MPU 15 outputs the changeover instruction of the output source to the monitor controlling section 13. The monitor controlling section 13 changes over the output source to the monitor 31 from the television controlling section 12 to the information processing section 11. At this time, the general-purpose MPU 15 instructs the monitor 31 to display a message for the notification that the output source of the screen image has changed over to the information processing section 11. The monitor controlling section 13 controls the monitor 31 to display the message by the OSD function. The message is displayed on the monitor 31, for example, for a period T22.

The cooperation control in the case where the information processing section 11 is in the operating state or S0 state of ACPI is carried out in this manner. More particularly, the output source to the monitor 31 continues to be the television controlling section 12 until the extended television application 114 is started up when starting of viewing by the extended television is accepted and outputting of television image information by the extended television application 114 is enabled (corresponding to a period T4). Then, after the extended television application 114 is started up and outputting of television image information by the extended television application 114 is enabled (corresponding to a period T5), then the output source to the monitor 31 is changed over to the information processing section 11 (corresponding to a period T6).

Consequently, the waiting time till starting of viewing of an image by the information processing apparatus 10 can be reduced. In particular, since the time is filled in with television image information of the simple television which can be started up quickly until television viewing by the extended television is enabled, the user can quickly start television viewing rapidly. As a result, the cumbersomeness in waiting till starting of viewing can be reduced.

Thereupon, the cooperation process 113 and the cooperation controlling section 152 take over the viewing state of the simple television to the extended television. Further, the cooperation process 113 and the cooperation controlling section 152 cause the extended television after the start-up to execute a function corresponding to the cooperation command which is the start-up main cause.

Further, even in such a case that the simple television is viewed already, the television viewing by the simple television is continued until television viewing by the extended television is enabled, and at a timing at which television viewing by the extended television is enabled, changeover to the extended television is carried out. Therefore, the television viewing of the user can be suppressed from being interrupted.

Further, upon the changeover, the cooperation process 113 and the cooperation controlling section 152 take over the viewing state of the simple television to the extended television. Further, the cooperation process 113 and the cooperation controlling section 152 cause the extended television after the start-up to execute a function corresponding to the cooperation command which has made the start-up main cause.

Consequently, even if the channel setting or the like is different between the simple television and the extended television, viewing of the extended television can be started in the common viewing state. In other words, the labor and time for carrying out re-setting and re-operation relating to the channel, image and sound on the extended television side can be omitted. Therefore, the convenience to the user is high. Further, since a disagreeable feeding caused by a difference in picture quality, sound quality or the like across the changeover can be suppressed, smooth changeover can be achieved.

Here, the principal coordination substance which can be executed by the extended television are such as described hereinabove in the description of the start-up main cause management table 151a of FIG. 6. Further, the principal viewing state to be taken over is such as described hereinabove in connection with the viewing information management table 101 of FIG. 7.

Now, a particular example of the display changeover control described above is described.

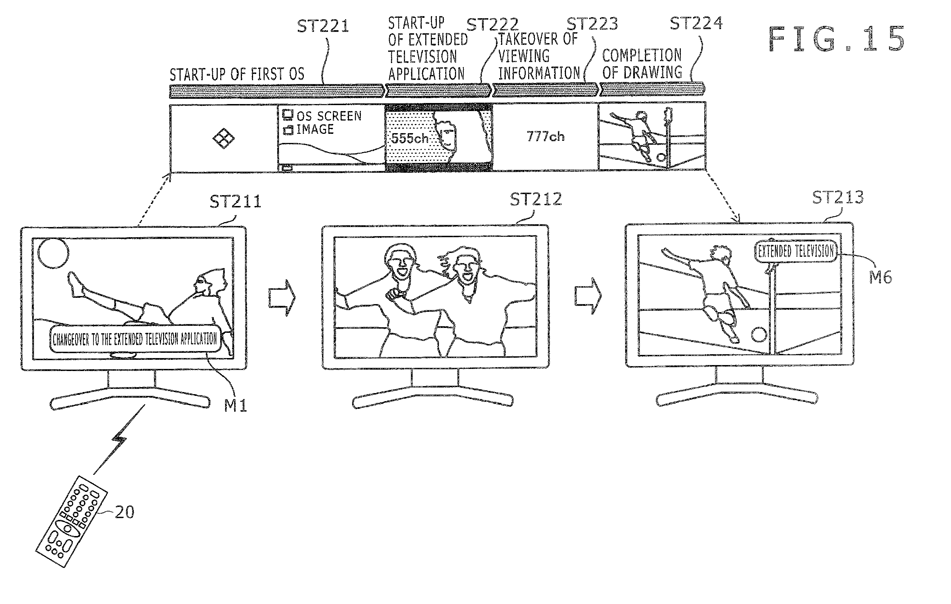

FIG. 15 illustrates display changeover control. In the following, the process illustrated in FIG. 15 is described in accordance with step numbers. It is to be noted that, in the following description, steps ST211 to ST213 illustrate screen images which are successively displayed on the monitor 31 by the information processing apparatus 10. On the other hand, steps ST221 to ST224 illustrate images of image information successively outputted from the information processing section 11 and including television image information. The images at steps ST221 to ST224 are not displayed on the monitor 31.

First, the steps ST211 to ST213 are described. It is assumed that, immediately prior to the step ST211, the user is viewing the simple television and the information processing section 11 is in the stopping state or S5 state of ACPI.

### Step ST211

The user would press a cooperation object button of the remote controller 20. It is assumed that the cooperation object button here is the button B for the start-up of the extended television. Consequently, the remote controller 20 transmits an infrared signal corresponding to the command of the button B to the information processing apparatus 10. The information processing apparatus 10 receives the cooperation command and starts cooperation control, that is, starts a process at step ST221. On the monitor 31, a message window M1 representing that changeover to the extended television is started is displayed for a predetermined period of time.

### Step ST212

A screen of the simple television is continuously displayed on the monitor 31. The information processing section 11 is starting up the first OS 112, cooperation process 113 and extended television application 114.

### Step ST213

The information processing section 11 completes the start-up of the first OS 112, cooperation process 113 and extended television application 114 and starts outputting of television image information. The information processing apparatus 10 changes over the output source to the monitor 31 from the television controlling section 12 to the information processing section 11. On the monitor 31, a message window M6 representing that changeover to the extended television has been carried out is displayed for a predetermined period of time.

Now, the steps sT221 to ST224 are described. The steps ST221 to ST224 relate to processes executed during execution of the processes at steps ST211 to ST213.

### Step ST221

The information processing section 11 carries out start-up of the first OS 112. Image information outputted from the information processing section 11 is information of an OS screen image of the first OS 112. Further, after the start-up of the first OS 112 is completed, the information processing section 11 carries out start-up also of the cooperation process 113.

### Step ST222

The cooperation process 113 starts up the extended television application 114. The extended television application 114 is started up in accordance with the setting substance, for example, set in the preceding operation cycle by the extended television application 114 and stored in the viewing information storage portion 111, for example, in accordance with the channel setting of the channel 555.

### Step ST223

The extended television application 114 acquires viewing information of the television controlling section 12 from the cooperation process 113 and takes over the viewing state based on the viewing information. For example, the channel setting is changed to the channel 777.

### Step ST224

The information processing section 11 starts outputting of television image information taking over the viewing state. Then, the information processing section 11 instructs the general-purpose MPU 15 to change over the output source to the monitor 31. The general-purpose MPU 15 controls the monitor controlling section 13 to change over the output source to the monitor 31 from the television controlling section 12 to the information processing section 11. Then, a screen image corresponding to television image information outputted from the information processing section 11 is displayed on the monitor 31 (corresponding to step ST213).

In this manner, the information processing apparatus 10 carries out changeover from the simple television to the extended television after outputting of television image information by the extended television is enabled at step ST224. For example, if it is assumed that the output source to the monitor 31 is changed over to the information processing section 11 after an operation of a cooperation object button is accepted at step ST211, then a screen image of the first OS 112 is displayed on the monitor 31 and the television viewing of the user is interrupted. Therefore, the output source to the monitor 31 is controlled to the television controlling section 12 until the step ST224 is reached so that interruption of the television viewing of the user can be suppressed.

Further, for example, in the case where the user is not viewing the simple television, when cooperation start-up is started at step ST211, the information processing apparatus 10 starts up the television controlling section 12 to enable viewing by the simple television. Then, the information processing apparatus 10 carries out changeover from the simple television to the extended television after outputting of television image information by the extended television is enabled at step S224. This makes it possible for the user to start television viewing immediately without waiting until the process at step ST224 is carried out.

It is to be noted that, at step ST222, the extended television application 114 may be started up in a state in which viewing information acquired based on an inquiry to the general-purpose MPU 15 by the cooperation process 113 is reflected.

Further, also in the case where the state of the information processing section 11 is the standby state or S3 state of ACPI or the rest state or S4 state of ACPI, processing similar to that in the cooperation control from the stopping state is carried out. However, at step ST221, the starting or returning method of the first OS 112 is different.

Further, also in the case where the state of the information processing section 11 is the operating state or S0 state of ACPI, processing similar to that in the cooperation control from the stopping state is carried out. However, since the first OS 112 is already in the operating state, the processing is different in that the process at step ST221 is not carried out and the processing for cooperation control is carried out beginning with step ST222.

Incidentally, in the description of the second embodiment, it is described that, when cooperation start-up is generated when the information processing section 11 is in the operating state or S0 state of ACPI, the output source to the monitor 31 is changed over from the television controlling section 12 to the information processing section 11 after the extended television application 114 is started up.

However, depending upon the state of the information processing section 11, the cooperation control may not possibly be carried out with certainty. For example, when the first OS 112 is being started up or when the first OS 112 is being shut down, the cooperation control may not be carried out. In this instance, it is preferable to take a countermeasure for allowing the user to recognize that the operation intended by the user cannot be carried out.

Therefore, in a modification described below, when the information processing section 11 is in the operating state, the timing at which the output source to the monitor 31 is changed over from the television controlling section 1-2 to the information processing section 11 is changed so that the user can readily recognize the state of the first OS 112.

It is to be noted that it is assumed that the information processing apparatus 10 is utilized for television viewing by the simple television before the following processing procedure is started. Also it is assumed that the information processing section 11 is in the power on operating state or S0 state of ACPI while the extended television application 114 remains in a state in which it is not started up as yet.

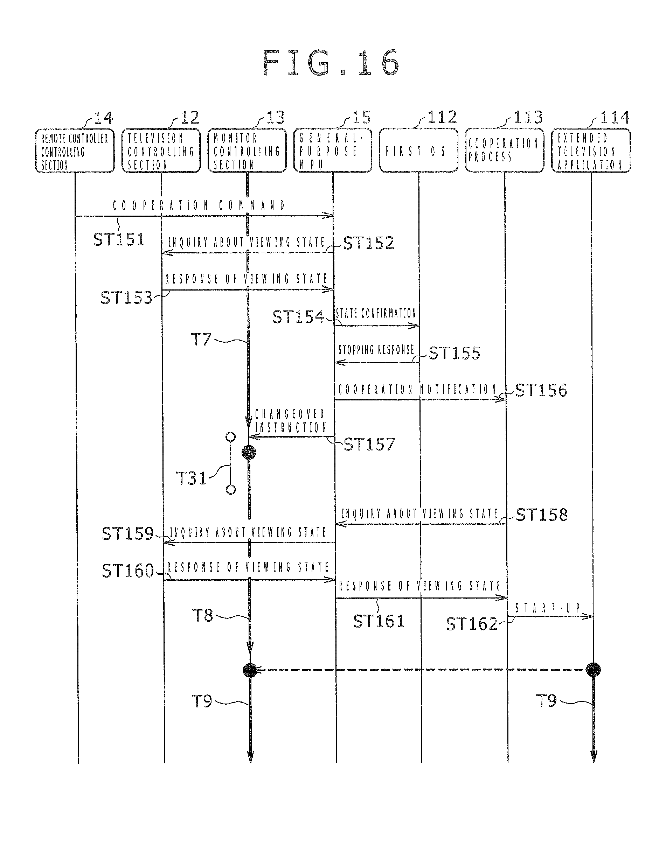

FIG. 16 is a sequence diagram illustrating another example of the second cooperation control. In the following, the process illustrated in FIG. 16 is described in accordance with step numbers.

### Step ST151

The remote controller controlling section 14 receives a cooperation command from the remote controller 20. The remote controller controlling section 14 outputs the cooperation command to the general-purpose MPU 15.

### Step ST152

The general-purpose MPU 15 inquires the television controlling section 12 of a viewing state.

### Step ST153

The television controlling section 12 refers to the viewing information management table 101 stored in the viewing information storage portion 121 to issue a response of the viewing state to the general-purpose MPU 15.

### Step ST154

The general-purpose MPU 15 inquires the first OS 112 of a power saving state.

### Step ST155

The first OS 112 issues a response that it is in the operating state.

### Step ST156

The general-purpose MPU 15 outputs a cooperation notification to the cooperation process 113. The cooperation notification includes the cooperation command acquired at step ST151.

### Step ST157

The general-purpose MPU 15 outputs a changeover instruction of the output source to the monitor controlling section 13. The monitor controlling section 13 changes over the output source to the monitor 31 from the television controlling section 12 to the information processing section 11. At this time, the general-purpose MPU 15 issues an instruction to display a message for the notification that the output source of the screen image has changed over to the information processing section 11. The monitor controlling section 13 controls the monitor 31 to display the message by the OSD function. The message is displayed on the monitor 31, for example, for a period T31.

### Step ST158

The cooperation process 113 inquires, after it acquires the cooperation notification at step ST156, the general-purpose MPU 15 of a viewing state.

### Step ST159

The general-purpose MPU 15 inquires the television controlling section 12 of a viewing state.

### Step ST160

The television controlling section 12 refers to the viewing information management table 101 stored in the viewing information storage portion 121 to issue a response of the viewing state to the general-purpose MPU 15.

### Step ST161

The general-purpose MPU 15 issues a response of the viewing state to the cooperation process 113.

### Step ST162

The cooperation process 113 starts up the extended television application 114. At this time, the cooperation process 113 takes over the acquired viewing state to the extended television application 114. Further, the cooperation process 113 outputs a cooperation command to the extended television application 114. Thereafter, the extended television application 114 completes the start-up. The extended television application 114 starts outputting of television image information in the viewing state inputted by the cooperation process 113. Further, the extended television application 114 executes a function corresponding to the cooperation command inputted from the cooperation process 113.

The cooperation control in the case where the information processing section 11 is in the operating state or S0 state of ACPI is carried out in this manner. In particular, when starting of viewing is accepted by the extended television, the output source to the monitor 31 is changed over to the information processing section 11 (corresponding to the terminal end of a period T7). Consequently, a screen image of the first OS 112 is displayed on the monitor 31 (the display period corresponds to a period T8). Further, in response to start-up of the extended television application 114, a screen image of the extended television application 114 is displayed, for example, in a window or in the full screen in the screen image, and display of a television program by the monitor 31 is started (corresponding to a period T9).

Consequently, when the user operates a cooperation object button, the user can readily recognize the state of the first OS 112. Then, the user can decide appropriately whether or not an operation intended by the user can be executed by the information processing apparatus 10.

For example, even if the information processing section 11 is in the operating state, if the information processing section 11 is in a state during shutdown or during start-up, then a case in which the cooperation control cannot be executed may possibly occur. Therefore, if an operation of a cooperation object button is accepted while the information processing section 11 is in the operating state, then the output source to the monitor 31 is changed over to the information processing section 11. If such changeover is carried out, then the user can immediately decide whether or not start-up of the extended television application 114 by the first OS 112 can be carried out.

In so far as embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The present technology contains subject matter related to that disclosed in Japanese Priority Patent Application JP 2010-289484 filed in the Japan Patent Office on December 27, 2010, the entire content of which is hereby incorporated by reference.

While preferred embodiments of the disclosed technology have been described using specific terms, such description is for illustrative purpose only, and it is to be understood that changes and variations may be made without departing from the spirit or scope of the following claims.

## Claims

1. An information processing apparatus, comprising:
a first image information production section adapted to produce first image information for causing an image to be displayed on a display apparatus;
a second image information production section having start-up time shorter than that of said first image information production section and adapted to produce second image information for causing an image to be displayed on the display apparatus; and
a control section adapted to set, when an operation input relating to a function which involves start-up of said first image information production section is accepted, an output source to the display apparatus to said second image information production section until outputting of the first image information is enabled but change over, after the outputting of the first image information is enabled, the output source to said first image information production section.

2. The information processing apparatus according to claim 1, wherein the operation input is an operation input for the instruction to start viewing of an image by said first image information production section.

3. The information processing apparatus according to claim 1, wherein the operation input is an operation input for the instruction to execute a function which said second image information production section does not have.

4. The information processing apparatus according to claim 3, wherein the first image information and the second image information are information for displaying a television image, and
the operation input is an operation input for the instruction of one of starting of recording by said first image information production section, display of a result of the recording, acquisition of program linkage data and display changeover between terrestrial digital broadcasting and satellite digital broadcasting.

5. The information processing apparatus according to claim 1, wherein said first image information production section executes a function corresponding to the operation input after outputting of the first image information becomes enabled.

6. The information processing apparatus according to claim 1, wherein said control section acquires, when the output source is to be changed over to said first image information production section, setting information to be used for production of the second image information from said second image information production section and outputs the setting information to said first image information production section, and
said first image information production section produces the first image information using the setting information.

7. The information processing apparatus according to claim 6, wherein said control section acquires, when the operation input is accepted, the setting information from said second image information production section and stores the setting information into a storage section and then acquires, if the setting information cannot be obtained from said second image information production section when the output source is to be changed over to said first image information production section later, the setting information from said storage section and outputs the setting information to said first image information production section.

8. The information processing apparatus according to claim 6, wherein the first image information and the second image information are information for displaying a television image, and
the setting information includes at least one of information of a channel of a television broadcasting wave, a program table, picture quality and a subtitle.

9. The information processing apparatus according to claim 8, wherein the first image information and the second image information include information relating to sound, and
the setting information includes at least one of information relating to sound quality, a sound volume and a designation of a main or sub voice.

10. The information processing apparatus according to claim 1, wherein said first image information production section is implemented by said information processing apparatus executing a program of a predetermined operating system and a program of a predetermined application which operates on the operating system and produces an image.

11. The information processing apparatus according to claim 1, wherein said first image information production section is implemented by said information processing apparatus executing a program of a predetermined application for producing an image.

12. The information processing apparatus according to claim 1, wherein said control section starts up said second image information production section when said image information production section is not started up when the operation input is accepted.

13. A display changeover method for an information processing apparatus, comprising:
setting, when an operation input relating to a function which involves start-up of a first image information production section for producing first image information for causing an image to be displayed on a display apparatus is accepted, an output source to the display apparatus to a second image information production section having start-up time shorter than that of the first image information production section for producing second image information for causing an image to be displayed on the display apparatus until outputting of the first image information is enabled; and
changing over the output source to the first image information production section after outputting of the first image information is enabled.
